(19) Europäisches Patentamt / European Patent Office / Office européen des brevets

(11) **EP 3 820 024 A1**

(12) **EUROPEAN PATENT APPLICATION**
published in accordance with Art. 153(4) EPC

(43) Date of publication:
**12.05.2021 Bulletin 2021/19**

(21) Application number: **19830391.9**

(22) Date of filing: **19.06.2019**

(51) Int Cl.:
**H02K 3/28** *(2006.01)*          **H02K 1/14** *(2006.01)*
**H02K 3/18** *(2006.01)*

(86) International application number:
**PCT/JP2019/024308**

(87) International publication number:
**WO 2020/008883 (09.01.2020 Gazette 2020/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **06.07.2018   JP 2018128860**

(71) Applicant: **Mitsubishi Electric Corporation Tokyo 100-8310 (JP)**

(72) Inventor: **HAZEYAMA, Moriyuki Tokyo 100-8310 (JP)**

(74) Representative: **Trinks, Ole
Meissner Bolte Patentanwälte
Rechtsanwälte Partnerschaft mbB
Widenmayerstraße 47
80538 München (DE)**

(54) **DYNAMO-ELECTRIC MACHINE**

(57)     A rotating electric machine includes a rotor and a stator. The rotor has n permanent magnets arranged in a circumferential direction. The stator includes m slots and teeth arranged in a circumferential direction and r-phase coils wound around the teeth. The coil has, in each phase, s phase coils connected in series from a first phase coil to an sth phase coil. The ratio of the number of poles n of the permanent magnets to the number of slots m is given as n : m = (3±1) : r. The first phase coils of respective phases are connected to an inverter, and the sth phase coils of respective phases are connected to a neutral point. The phase coils are wound around the teeth such that the first phase coils are not adjacent to each other in a circumferential direction.

FIG. 1

EP 3 820 024 A1

**Description**

Technical Field

The present invention relates to rotating electric machines and, in particular, to a rotating electric machine having a rotor and a stator.

Background Art

As a method for making serial connections, for example, in a four-pole and six-slot rotating electric machine, there has been known a method for connecting windings of different phases to one another in the order of U1, V1, W1, U2, V2, and then W2, for example, clockwise (see, for example, Patent Literature 1).
Further, as a method for insulating adjacent windings disposed in the same slot, a method for inserting an insulating paper is primarily used.

Citation List

Patent Literature

Patent Literature 1: Japanese Unexamined Patent Application Publication JP 2002-112 488 A

Summary of the Invention

Technical Problem

In the case of the connecting method described in Patent Literature 1 listed above, the three coils U1, V1, and W1 are high-voltage coils. Therefore, the interwinding voltages between U1 and V1 and between V1 and W1 are the highest. On the other hand, the three coils U2, V2, and W2 are low-voltage coils. Therefore, the interwinding voltages between U2 and V2 and between V2 and W2 are the lowest. Thus, values of interwinding voltage vary from slot to slot. In this case, the thickness of an insulating paper is determined by making a design for intra-slot insulation suitable to the maximum value of interwinding voltage. This results in the use of the same insulating paper even in a slot with a low interwinding voltage, although the insulating paper is thicker than is necessary.
The present invention has been made to solve such a problem and has as an object to provide a rotating electric machine intended to reduce the maximum value of interwinding voltage.

Solution to the Problem

A rotating electric machine according to an embodiment of the present invention includes a rotor and a stator placed at a clearance from an outer circumference of the rotor. The rotor has n permanent magnets arranged in a circumferential direction. The stator includes m teeth arranged in a circumferential direction, m slots each formed between two adjacent ones of the teeth, and coils of r phases wound around the teeth.
Each of the coils of the r phases is composed of s phase coils connected in series in sequence from a first phase coil to an sth phase coil, and the coils of the r phases are Y-connected such that the sth phase coils of respective phases are connected to a neutral point. A ratio of the number of poles n of the permanent magnets to the number of slots m of the slots is given as n : m = $(3\pm1)$ : r. Here, r is a natural number of 3 or larger, and n, m, and s are each a natural number of 2 or larger. The first phase coils of respective phases are arranged so as not to be adjacent to each other in a circumferential direction.

Advantageous Effects of the Invention

The rotating electric machine according to an embodiment of the present invention makes it possible to reduce the maximum value of interwinding voltage.

Brief Description of Drawings

FIG. 1      is a cross-sectional view showing a configuration of a four-pole and six-slot rotating electric machine according to Embodiment 1.

FIG. 2      is a circuit diagram showing a configuration of the whole of a system provided with the rotating electric machine according to Embodiment 1.

FIG. 3      is an explanatory diagram showing a method for connecting coils in the rotating electric machine according to Embodiment 1.

FIG. 4      is a connecting diagram showing a method for connecting U-phase coils in the rotating electric machine according to Embodiment 1.

FIG. 5      is a cross-sectional view of a four-pole and six-slot rotating electric machine of an example of related art.

FIG. 6      is a diagram showing a waveform of a three-phase AC voltage that is applied to the coils of the rotating electric machine according to Embodiment 1.

FIG. 7      is a diagram showing interphase potential differences at slots during three-phase AC application in the rotating electric machine of the example of related art.

FIG. 8      is a diagram showing interphase potential differences at slots during three-phase AC application in the rotating electric machine according to Embodiment 1.

FIG. 9      is a cross-sectional view of a related-art ten-pole and twelve-slot rotating electric machine.

FIG. 10      is a connecting diagram of a six-pole and nine-slot rotating electric machine according to Embodiment 2.

FIG. 11      is a cross-sectional view showing a configuration of the six-pole and nine-slot rotating electric machine according to Embodiment 2.

FIG. 12      is a cross-sectional view of a six-pole and nine-slot rotating electric machine in an example of related art.

FIG. 13      is a connecting diagram showing a method for connecting U-phase coils in a rotating electric machine according to Embodiment 3.

FIG. 14      is a winding diagram of each tooth of the rotating electric machine according to Embodiment 3.

FIG. 15      is an equivalent circuit diagram of each winding of the rotating electric machine according to Embodiment 3.

FIG. 16      is a cross-sectional view showing a configuration of an eight-pole and twelveslot rotating electric machine according to Embodiment 4.

FIG. 17      is a connecting diagram of the eight-pole and twelve-slot rotating electric machine according to Embodiment 4.

FIG. 18      is a cross-sectional view of an eight-pole and twelve-slot rotating electric machine of an example of related art.

FIG. 19      is a diagram showing interwinding potential differences of the rotating electric machine according to Embodiment 4.

FIG. 20      is a cross-sectional view showing a configuration of an eight-pole and twelveslot rotating electric machine according to Embodiment 1.

FIG. 21      is a connecting diagram of a ten-pole and fifteen-slot rotating electric machine according to Embodiment 4.

FIG. 22      is a cross-sectional view showing a configuration of the ten-pole and fifteen-slot rotating electric machine according to Embodiment 4.

FIG. 23      is a connecting diagram of a twelve-pole and eighteen-slot rotating electric machine according to Embodiment 4.

FIG. 24      is a cross-sectional view showing a configuration of the twelve-pole and eighteen-slot rotating electric machine according to Embodiment 4.

FIG. 25      is a cross-sectional view showing a configuration of a six-pole and fifteen-slot rotating electric machine according to Embodiment 5.

FIG. 26      is a connecting diagram of the six-pole and fifteen-slot rotating electric machine according to Embodiment 5.

FIG. 27      is a cross-sectional view of a six-pole and nine-slot rotating electric machine according to Embodiment 6.

FIG. 28      is an enlarged view including a portion between U1 and V3 of the six-pole and nine-slot rotating electric machine according to Embodiment 6.

FIG. 29      is an enlarged view including a portion between W1 and U2 of the six-pole and nine-slot rotating electric machine according to Embodiment 6.

FIG. 30      is an enlarged view including a portion between W2 and U3 of the six-pole and nine-slot rotating electric machine according to Embodiment 6.

FIG. 31      is a cross-sectional view showing modifications of permanent magnets of the rotating electric machines according to Embodiments 1 to 6 of the present invention.

## Description of Embodiments

In the following, rotating electric machines according to embodiments of the present invention are described with reference to the drawings.

Embodiment 1

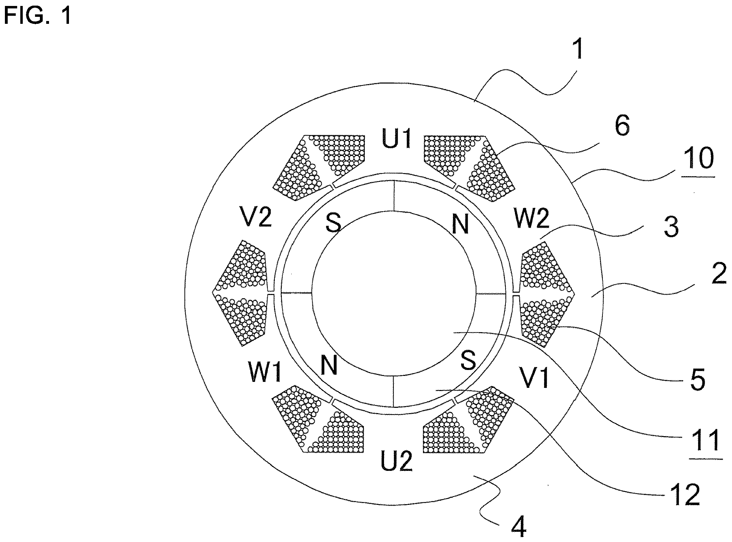

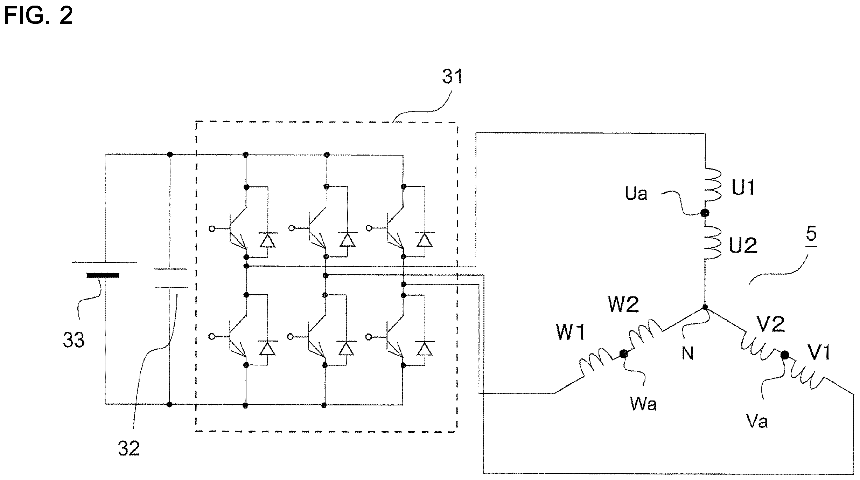

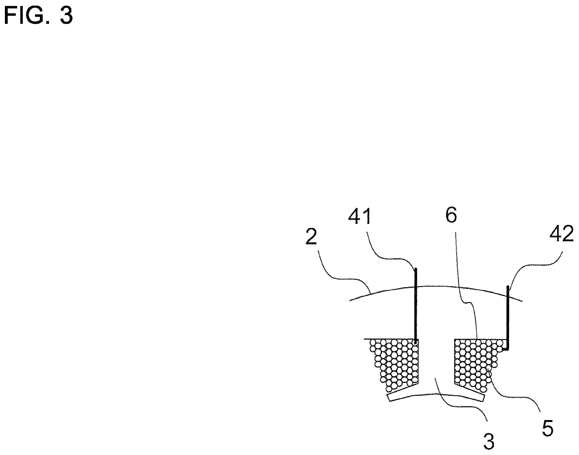

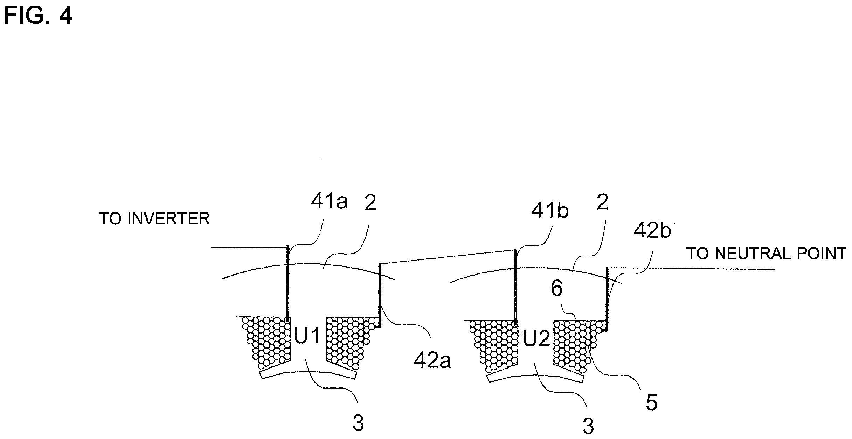

FIG. 1 is a cross-sectional view showing a configuration of a rotating electric machine according to Embodiment 1. FIG. 2 is a connecting diagram showing a configuration of the whole of a system provided with the rotating electric machine according to Embodiment 1. FIG. 3 is an explanatory diagram showing a method for connecting coils provided in the rotating electric machine according to Embodiment 1. FIG. 4 is a connecting diagram showing a method for connecting U-phase coil segments of the rotating electric machine according to Embodiment 1.

In the following, a motor 10 is described as an example of the rotating electric machine. As shown in FIG. 1, the motor 10 includes a stator 1 and a rotor 11. The example shown in FIG. 1 illustrates a case where the number of poles n of the rotor 11 is 4 and the number of slots m of the stator 1 is 6. Note, however, that the number of poles n and the number of slots m are not limited to these numbers.

In Embodiment 1, the ratio of the number of poles n to the number of slots m needs only satisfy the condition n : m = (3-1) : r, where r is the number of phases of the rotating electric machine. Incidentally, the number of teeth 3 is also m, as the number of teeth 3 is equal to the number of slots 6. Accordingly, the relationship n : m = (3-1) : r also holds for the ratio of the number of poles n to the number m of teeth 3.

As shown in FIG. 1, the stator 1 includes a stator core 2, a plurality of teeth 3, a core back 4, a coil 5, and a plurality of slots 6. The stator core 2 has an annular shape. The rotor 11 is disposed inside the stator core 2. There is clearance between an inner circumferential surface of the stator core 2 and an outer circumferential surface of the rotor 11. The inner circumferential surface of the stator core 2 is provided with six teeth 3. The teeth 3 face the outer circumferential surface of the rotor 11. The teeth 3 are placed at intervals in a circumferential direction.

The teeth 3 are placed, for example, at equal pitches. Further, the teeth 3 each has a protruding shape. Further, the slots 6 are each formed between adjacent ones of the teeth 3. Further, the coil 5 is wound around the teeth 3 through the use of the slots 6. In the present embodiment, a concentrated winding scheme for winding the coil 5 directly around the teeth 3 is used as a method for winding the coil 5.

Further, the outer circumferential surface of the rotor 11 is provided with four permanent magnets 12 of different magnetic properties.

The permanent magnets 12 are arranged such that the north poles and the south poles alternate in a circumferential direction. The permanent magnets 12 are placed, for example, at equal pitches. Note here that the legends "N" and "S" shown in FIG. 1 represent magnetic poles that are generated on the outer circumferential surface of the rotor 11.

Further, as shown in FIG. 2, the coil 5 of the stator 1 is connected to a power source 33 via an inverter 31. Further, a capacitor 32 is connected upstream of the inverter 31, that is, the capacitor 32 is positioned close to the power source 33. The inverter 31 includes a plurality of switching elements. Two of these switching elements are provided for each phase of the motor 10. The two switching elements are connected in series. On-off actions of the switching elements control voltages that are applied to the coil 5.

The capacitor 32 reduces current fluctuations that are generated by a switching operation performed by the power source 33 and the inverter 31. The power source 33 is composed of a DC power source. However, without being limited to this case, the power source 33 may be composed of an AC power source. In this case, a DC current needs only be obtained by rectifying an AC current from the AC power source, for example, with a diode or other devices.

In FIG. 1, the first letters "U", "V", and "W" of the legends "U1", "V1", and "W1" or other legends written on the teeth 3 represent phases of the motor 10, respectively.

Further, the legends "U1" and "U2" shown in FIG. 1 correspond to the legends "U1" and "U2" shown in FIG. 2, respectively. As shown in FIG. 2, the legends "U1" and "U2" represent a first coil of a U phase and a second coil of the U phase, respectively, in order of proximity to the inverter 31. In the following, the first coil of the U phase is called "phase coil U1", and the second coil of the U phase is called "phase coil U2".

Similarly, the legends "V1" and "V2" shown in FIG. 1 correspond to the legends "V1" and "V2" shown in FIG. 2, respectively. As shown in FIG. 2, the legends "V1" and "V2" represent a first coil of a V phase and a second coil of the V phase, respectively, in order of proximity to the inverter 31. In the following, the first coil of the V phase is called "phase coil V1", and the second coil of the V phase is called "phase coil V2".

Similarly, the legends "W1" and "W2" shown in FIG. 1 correspond to the legends "W1" and "W2" shown in FIG. 2, respectively. As shown in FIG. 2, the legends "W1" and "W2" represent a first coil of a W phase and a second coil of the W phase, respectively, in order of proximity to the inverter 31. In the following, the first coil of the W phase is called "phase coil W1", and the second coil of the W phase is called "phase coil W2".

In Embodiment 1, as shown in FIG. 2, the coil 5 is Y-connected. That is, in the U phase, the phase coils U1 and U2 are connected in series. In the V-phase, the phase coils V1 and V2 are connected in series. In the W phase, the phase coils W1 and W2 are connected in series. Further, winding tails of the second coils of the phases U, V, and W, that is, winding tails of the phase coils U2, V2, and W2, are each connected to a neutral point N. Thus, Embodiment 1 illustrates a case where the number s of phase coils connected in series in each phase is 2. However, without being limited to this number, the number s may be any number of 2 or larger.

In the following, as shown in FIG. 2, a potential between the phase coils U1 and U2, a potential between the phase coils V1 and V2, and a potential between the phase coils W1 and W2 are called "Ua", "Va", and "Wa", respectively.

In Embodiment 1, as mentioned above, the coil 5 is wound around the teeth 3 under the concentrated winding scheme. Under the concentrated winding scheme, one phase coil is wound around one tooth 3. Specifically, as shown in FIG. 1, the phase coil U1 is wound around one tooth 3. Accordingly, the relationship s × r = m holds for the numbers m of teeth 3 and slots 6, the number of phases r of the coil 5, and the number s of phase coils connected in series.

The phase coil V2 is wound around another tooth 3 that is adjacent to the tooth 3 around which the phase coil U1 is wound. In this way, one phase coil is wound around one tooth 3. Then, each two of the teeth 3 share one slot 6 formed between the two. That is, the phase coil U1 and the phase coil V2 use a common slot 6. Thus, in one slot 6, two phase coils wound around teeth 3 on both sides of the slot are adjacent to each other.

FIG. 3 is a diagram showing one of the phase coils U1, U2, V1, V2, W1, and W2. As shown in FIG. 3, in Embodiment 1, a winding of each of these coils that is close to a corresponding one of the teeth 3 is a "coil winding head 41" and a winding of each of these coils that is located in a slot central part of a corresponding one of the slots 6 is a "coil winding tail 42".

Further, in a method for feeding power to the coil 5, the "coil winding head 41" is closer to the inverter 31 than is the "coil winding tail 42", which is closer to the neutral point N than is the "coil winding head 41". That is, a higher voltage is applied to the "coil winding head 41" than is the "coil winding tail 42", to which a lower voltage is applied than is "coil winding head 41".

Further, a method for connecting in-phase coils is as shown in FIG. 4. FIG. 4 shows a method for connecting in-phase coils of the U phase. A winding head 41a of the phase coil U1 is connected to the inverter 31, and a winding tail 42b of the phase coil U2 is connected to the neutral point N. Further, a winding tail 42a of the phase coil U1 is connected to a winding head 41b of the phase coil U2. As the V phase and the W phase are similar in configuration, a description of the V phase and the W phase is omitted here.

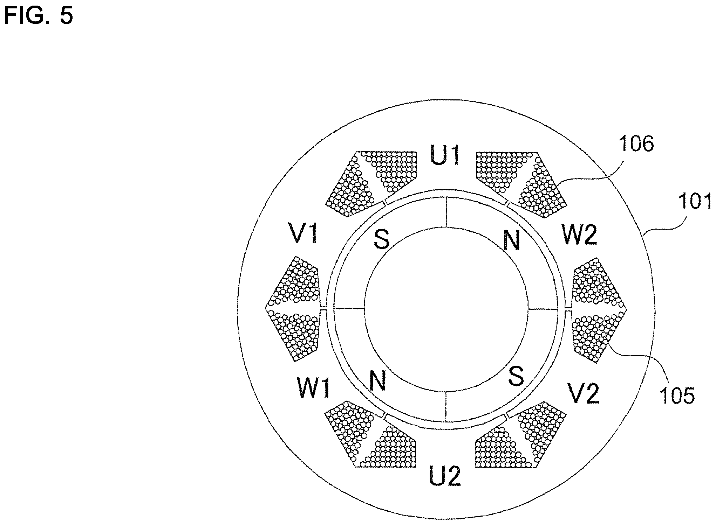

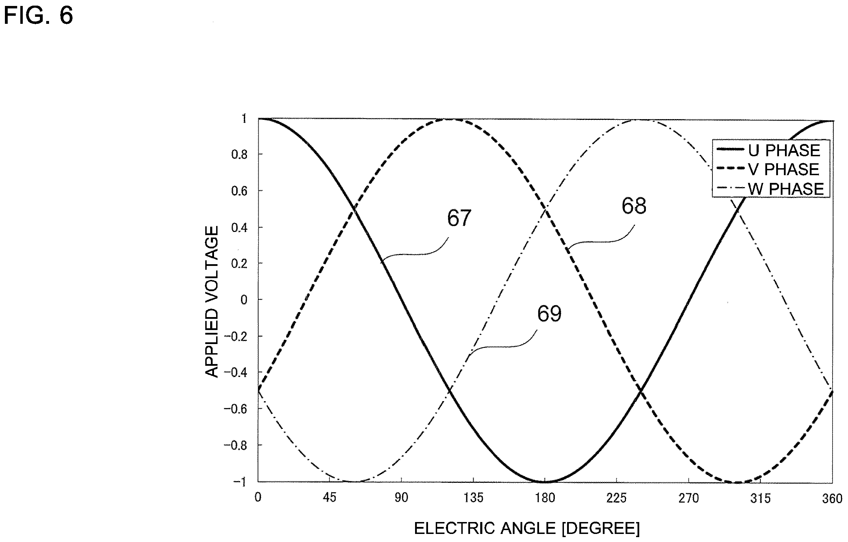

A configuration of FIG. 5 is common in a case where each phase has two phase coils in a related-art Y-connected three-phase four-pole and six-slot motor. That is, as shown in FIG. 5, a coil 105 is wound in the order of U1, V1, W1, U2, V2, W2, and then U1 counterclockwise. A case is discussed where applied voltages such as those shown in FIG. 6 are applied to the coil 105 in this case. In FIG. 6, to be used as benchmarks, the applied voltages are standardized by preset voltage values such that the phase amplitudes of the applied voltages is each a value of 2. In FIG. 6, the solid line 67 represents the applied voltage that is applied to the U-phase coil, the dotted line 68 represents the applied voltage that is applied to the V-phase coil, and the dot-and-dash line 69 represents the applied voltage that is applied to the W-phase coil.

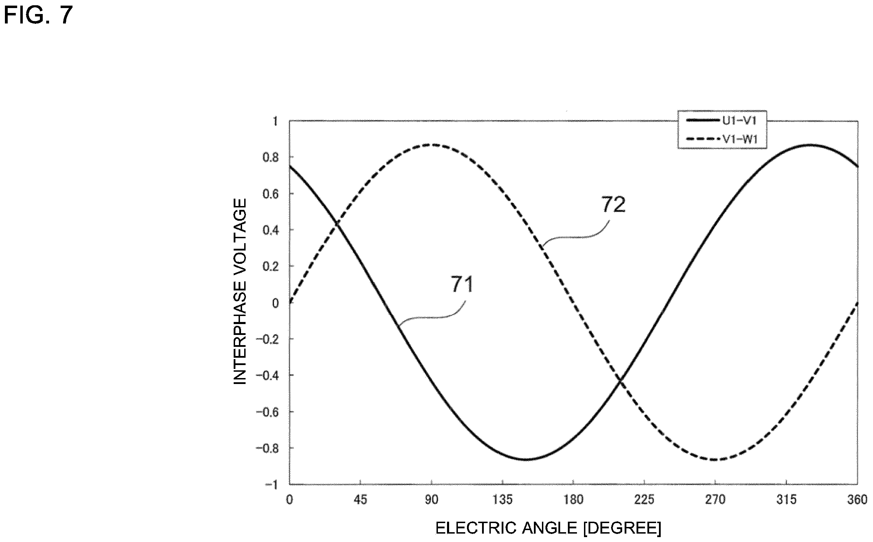

As shown in FIG. 7, the application to the coil 105 of the applied voltages shown in FIG. 6 causes interwinding potential differences at slots 106 between the phase coils U1 and V1 and between the phase coils V1 and W1 to be $\sqrt{3}/2$ times as large as the applied voltage of each phase. In FIG. 7, the solid line 71 represents a potential difference between the phase coils U1 and V1, and the dotted line 72 represents a potential difference between the phase coils V1 and W1.

In FIG. 7, the potential difference between the phase coils U1 and V1 represents a potential difference between the potentials $U_a$ and $V_a$, and the potential difference between the phase coils V1 and W1 represents a potential difference between the potentials Va and Wa. Meanwhile, interwinding potential differences between the phase coils U2 and V2 and between the phase coils V2 and W2 are 0, as the phase coils U2, V2, and W2 are connected to the neutral point N.

Thus, in the related-art motor shown in FIG. 5, there is a mixture of a slot with the potential difference between the potentials $U_a$ and $V_a$, and a slot with the potential difference between the potentials $V_a$ and $W_a$, and a slot with a potential difference of 0. Therefore, interwinding potential differences vary greatly from slot 106 to slot 106. Even in such a case, a design for insulation in each of the slots 106 is made suitably to a place with the highest interwinding potential difference. In the example shown in FIG. 5, a design for insulation is made suitably to a space between the phase coils U1 and V1 and a space between the phase coils V1 and W1.

The term "design for insulation" refers to determining the size of an insulating paper that is inserted between adjacent windings disposed in one slot. In terms of the size of an insulating paper, an insulating paper of a large size is needed in a place with a large potential difference, while an insulating paper of a small size is only needed in a place with a small potential difference.

However, insulating papers of the same size are used without variations in the size of the insulating papers from slot to slot. That is, for stability of the accuracy of form of the inner diameter of the stator 101, interwinding insulation is installed in each of the slots 106 through the use of insulating papers of the same dimensions regardless of need for insulation. Therefore, an insulating paper of the largest size is used in each of the slots 106.

Next, connections and interwinding potential differences among slots in Embodiment 1 are described. In Embodiment 1, as shown in FIG. 1, in each phase, the phase coils U1, V1, and W1, to which a relatively high voltage is applied, and the phase coils U2, V2, and W2, to which a relatively low voltage is applied, are alternately disposed. That is, as shown in FIG. 1, the coil 5 is wound around the teeth 3 in the order of the phase coils U1, V2, W1, U2, V1, W2, and then U1 counterclockwise.

Therefore, the phase coils U1 and V2 are adjacent to each other in a first one of the slots 6. The phase coils V2 and W1 are adjacent to each other in a second one of the slots 6. The phase coils W1 and U2 are adjacent to each other in a third one of the slots 6. The phase coils U2 and V1 are adjacent to each other in a fourth one of the slots 6. The phase coils V1 and W2 are adjacent to each other in a fifth one of the slots 6. The phase coils W2 and U1 are adjacent to each other in a sixth one of the slots 6. Then, at the windings of interphase portions of the phase coils U2, V2, and W2, the potential is the potential of 0 of the neutral point N.

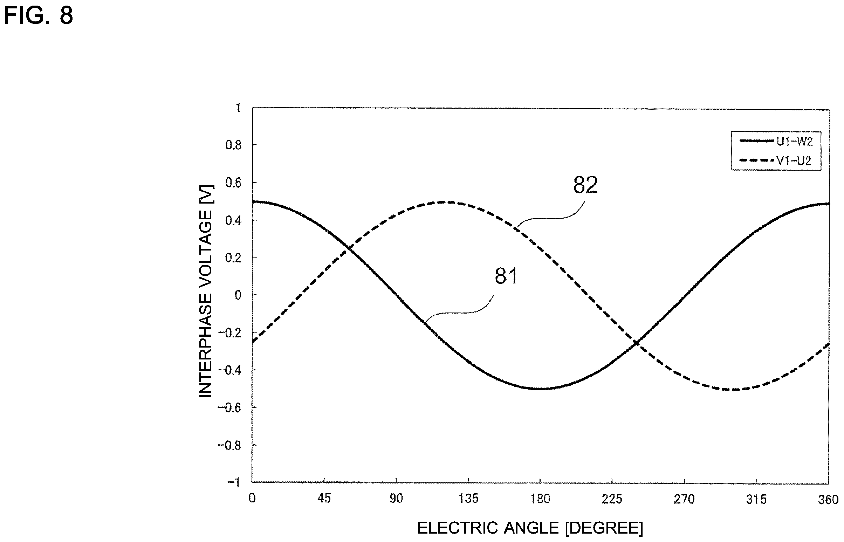

Therefore, in a case where the three-phase AC voltage shown in FIG. 6 is applied to the coil 5 of Embodiment 1, an interwinding potential difference at each of the slots 6 becomes equal in maximum value to an interwinding potential difference at the other slot 6 as shown in FIG. 8. Specifically, the maximum value of the interwinding potential difference at each of the slots 6 falls to 1/2 of the applied voltage of the corresponding phase.

In FIG. 8, as typical examples, the solid line 81 represents an interwinding potential difference at the slot 6 between the phase coils U1 and W2, and the dotted line 82 represents an interwinding potential difference at the slot 6 between the phase coils V1 and U2. Note here that the potential difference between the phase coils U1 and W2 represents a potential difference between the potential $U_a$ and the neutral point N and the potential difference between the phase coils V1 and U2 represents a potential difference between the potential Va and the neutral point N. The same applies to the other slots.

Therefore, in Embodiment 1, the maximum value of interwinding potential difference is $1/2 \div (\sqrt{3}/2) = 1/\sqrt{3} = 0.577$ times larger than that of the example of related art shown in FIG. 5. Thus, in Embodiment 1, as it is possible to reduce the maximum value of interwinding potential difference, it is easier to make a design for insulation and it is possible to use a thinner insulating paper than that of the example of related art. Further, a reduction in thickness of an insulating paper gives more space in the slots 6. This can result in increases in the numbers of windings of the coil 5 in the slots 6. This makes it possible to reduce a copper loss of the coil 5 and bring about improvement in efficiency of the motor 10.

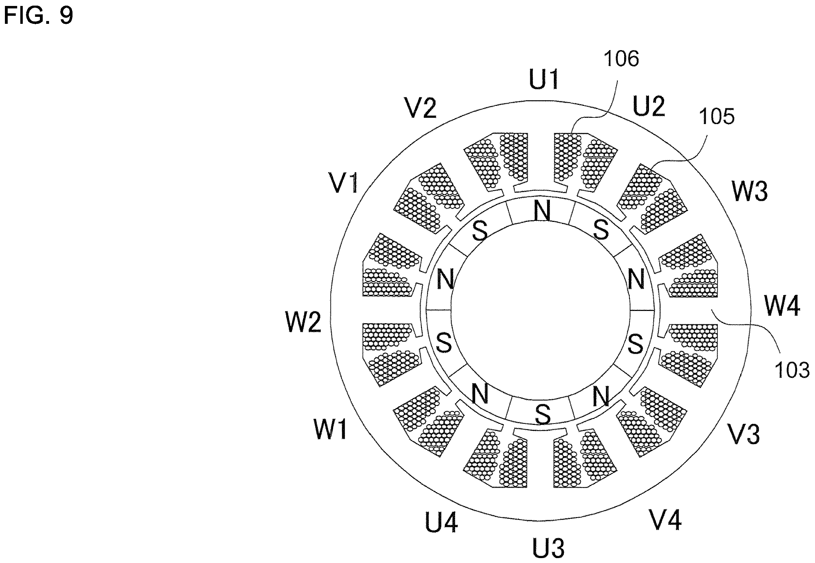

Effects of Embodiment 1 of the present invention are further shown here with reference to FIG. 9, which shows the case of a ten-pole and twelve-slot winding arrangement described, for example, in Japanese Unexamined Patent Application Publication JP 2011-030 309 A. In the configuration shown in FIG. 9, the coil is wound in the order of phase coils U1, V2, V1, W2, W1, U4, U3, V4, V3, W4, W3, U2, and then U1 counterclockwise. In this configuration, therefore, two high-voltage in-phase coils are adjacent to each other in one slot. In this case, however, there is no phase difference in voltage between these coils, which are in the same phase.

Then, the phase difference in voltage will increase if out-of-phase high-voltage coils are adjacent to each other in the ten-pole and twelve-slot configuration of FIG. 9. Accordingly, the configuration of the rotating electric machine according to Embodiment 1 of the present invention in which out-of-phase high-voltage coils are adjacent to each other is the most effective in reducing the potential difference, and is the most effective configuration. In the example of related art shown in FIG. 9, however, the configuration of Embodiment 1 cannot be applied, as the ratio of the number of poles to the number of slots fails to satisfy the condition (3-1) : r.

In Embodiment 1, when a potential difference between slots 6 is described, a potential difference between a winding head 41 and a winding tail 42 is used as an example for simplicity. However, a potential difference between slots of an actual motor is larger than a potential difference of Embodiment 1, as there are variations in the potential difference of the windings in slot central parts, but the effect of shortening the insulation distance is kept the same by reducing the maximum value of potential difference.

As noted above, in Embodiment 1, the concentrated-winding Y-connected r-phase rotating electric machine is configured such that the ratio of the number of poles n to the number of slots m of the rotating electric machine is given as n : m = (3-1) : r. Further, the coils of their respective phases are arranged such that the first coils, which are the highest in voltage in their respective phases, are not adjacent to each other in a circumferential direction.

This eliminates variations in interwinding potential difference, and makes it possible to reduce the maximum value of interwinding potential difference. This makes it possible to reduce the interwinding insulation distance. This can result in a reduction in size of an insulating paper. This gives more space in the slots 6, making it possible to increase the amounts of winding in the slots 6. This can result in a reduction in copper loss, bringing about improvement in efficiency of the rotating electric machine.

Embodiment 2

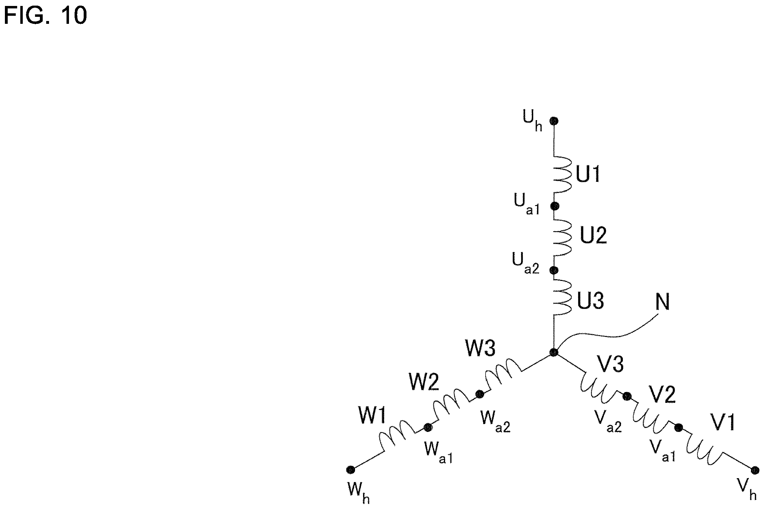

FIG. 10 is a connecting diagram of a rotating electric machine according to Embodiment 2. Also in Embodiment 2, a concentrated-winding Y-connected three-phase motor 10 is described as an example of the rotating electric machine. While Embodiment 1 has illustrated a case where the number s of phase coils connected in series is 2, Embodiment 2 illustrates a case where the number s of phase coils connected in series is 3.

That is, in Embodiment 2, three phase coils, namely a phase coil U1, a phase coil U2, and a phase coil U3, are connected in series to form a U phase coil. Similarly, three phase coils, namely a phase coil V1, a phase coil V2, and a phase coil V3, are connected in series to form a V phase coil. Further, similarly, three phase coils, namely a phase coil W1, a phase coil W2, and a phase coil W3, are connected in series to form a W phase coil.

In Embodiment 2, as shown in FIG. 10, the legends "U1", "U2", and "U3" represent a first coil of the U phase, a second coil of the U phase, and a third coil of the U phase, respectively, in order of proximity to the inverter 31. In the following, these coils are called "phase coil U1", "phase coil U2", and "phase coil U3". As the same applies to the V phase and the W phase, a description of the V phase and the W phase is omitted here.

In Embodiment 2, as shown in FIG. 10, the third coils of the phases U, V, and W, namely the phase coil U3, the phase coil V3, and the phase coil W3, are each connected to the neutral point N to form a Y connection.

In the following, as shown in FIG. 10, for the U phase, the potential $U_h$, the potential $U_{a1}$, and the potential $U_{a2}$ are defined as the input-side potential of the phase coil U1, the potential between U1 and U2, and the potential between U2 and U3, respectively. Further, for the V phase, the potential $V_h$, the potential $V_{a1}$, and the potential $V_{a2}$ are defined as the input-side potential of the phase coil V1, the potential between V1 and V2, and the potential between V2 and V3, respectively. Further, for the W phase, the potential $W_h$, the potential $W_{a1}$, and the potential $W_{a2}$ are defined as the input-side potential of the phase coil W1, the potential between W1 and W2, and the potential between W2 and W3, respectively.

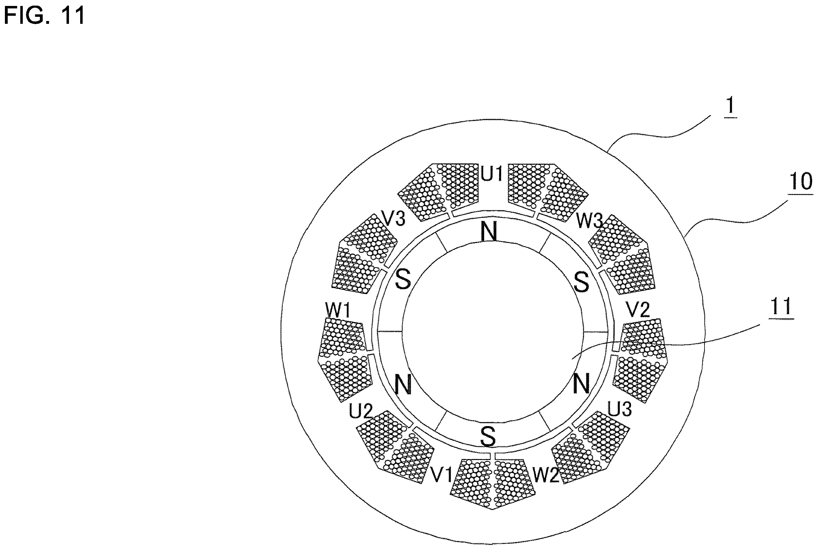

FIG. 11 is a cross-sectional view of a motor 10 corresponding to that in FIG. 10. It should be noted that FIG. 11 omits to illustrate connections from the inverter 31, but as in the case of FIG. 2, the first coils of their respective phases, namely the phase coils U1, V1, and W1, are connected to the inverter 31.

As shown in FIG. 11, Embodiment 2 illustrates a six-pole and nine-slot motor 10 in which the number of poles of the rotor 11 is 6 and the number of slots of the stator 1 is 9. In Embodiment 2, as in the case of Embodiment 1, the ratio of the number of poles n to the number of slots m is given as n : m = (3-1) : r, where r is the number of phases of the rotating electric machine.

Further, in Embodiment 2, as shown in FIG. 11, the coil 5 is wound around the teeth 3 in the order of the phase coils U1, V3, W1, U2, V1, W2, U3, V2, W3, and then U1 counterclockwise. In this case, there are maximum interwinding potential differences in three places, that is, between the phase coils W1 and U2, between the phase coils U2 and V1, and between the phase coils V1 and W2.

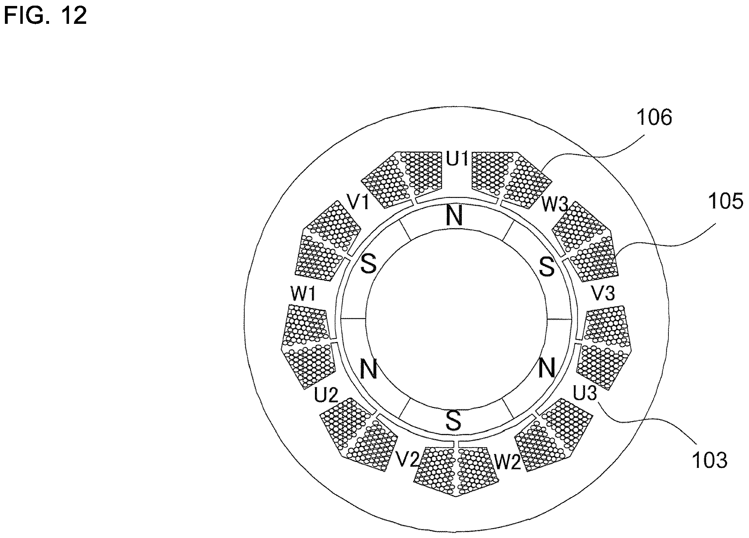

Meanwhile, in a related-art winding method, as shown in FIG. 12, the coil 105 is wound in the order of phase coils U1, V1, W1, U2, V2, W2, U3, V3, W3, and then U1 counterclockwise. In this case, as shown in FIG. 12, high-voltage phase coils, such as the phase coils U1, V1, and W1, are arranged on successive teeth 103. Accordingly, there are maximum interwinding potential differences in two places, that is, between the phase coils U1 and V1 and between the phase coils V1 and W1.

The use of the potentials shown in FIG. 10 results in the following potential differences: a potential difference between the potential $U_{a1}$ and the potential $V_{a1}$ between the phase coils U1 and V1 and a potential difference between the potential $V_{a1}$ and the potential $W_{a1}$ between the phase coils V1 and W1. Note here that the U-phase, V-phase, and W-phase potentials $U_h$, $V_h$, and $W_h$ are expressed by the following Formulas (1), (2), and (3), respectively, as sinusoidal voltage waveforms of a three-phase alternating current that are in amplitude coincidence and out of potential phase with one another by $2/3\pi$.

$$U_h = A\sin(\omega t + 2/3\pi) \qquad\qquad \ldots(1)$$

$$V_h = A\sin(\omega t) \qquad\qquad \ldots(2)$$

$$W_h = A\sin(\omega t - 2/3\pi) \qquad\qquad \ldots(3)$$

It should be noted that A denotes the amplitude and $\omega$ denotes the angular velocity and varies depending on the frequency f of a voltage. Note here that a relationship between the angular velocity $\omega$ and the frequency f is given as $\omega = 2\pi f$.

Then, the potentials $U_{a1}$, $V_{a1}$, and $W_{a1}$ fall down to 2/3 of $U_h$, $V_h$, and $W_h$ and can therefore be expressed by the following Formulas (4), (5), and (6), respectively.

$$U_{a1} = 2A/3\sin(\omega t + 2/3\pi) \qquad\qquad \ldots(4)$$

$$V_{a1} = 2A/3\sin(\omega t) \qquad\qquad \ldots(5)$$

$$W_{a1} = 2A/3\sin(\omega t-2/3\pi) \qquad\qquad \ldots(6)$$

Note here that the potential difference between the phase coils U1 and V1 can be expressed by Formula (7) using the addition theorem for sines.

$$U_{a1}-V_{a1}$$
$$= 2A/3\sin(\omega t+2/3\pi)-2A/3\sin(\omega t)$$
$$= 2A/3\{\sin(\omega t+2/3\pi)-\sin(\omega t)\}$$
$$= 2A/3*\sqrt{3}\sin(\omega t+1/3\pi)$$
$$= 2\sqrt{3}/3\,A\sin(\omega t+1/3\pi) \qquad\qquad \ldots(7)$$

Accordingly, the potential difference between the phase coils U1 and V1 has an amplitude of $2\sqrt{3}/3A$, and is $2\sqrt{3}/3$ times as large as the applied voltage of each phase. It should be noted that the potential difference between the phase coils V1 and W1 can also be calculated in a similar way.

As shown in FIG. 4 above, also in Embodiment 2, one winding of the U-phase coil that is close to a corresponding one of the teeth 3 is a "coil winding head 41" and one winding of the U-phase coil that is located in a slot central part of a corresponding one of the slots 6 is a "coil winding tail 42". The same applies to the V-phase coil and the W-phase coil. Further, in a method for feeding power to the coil 5, the "coil winding head 41" is closer to the inverter 31 than is the "coil winding tail 42", which is closer to the neutral point N than is the "coil winding head 41".

Then, a maximum inter-slot potential difference is reached, for example, between U2 and V1. This translates into a potential difference between the potentials $U_{a2}$ and $V_{a1}$. Note here that $U_{a2}$ is expressed by Formula (8).

$$U_{a2} = A/3\sin(\omega t+2/3\pi) \qquad\qquad \ldots(8)$$

Therefore, a potential difference between the phase coil U2 and the phase coil V1 can be expressed by Formula (9).

$$U_{a2}-V_{a1}$$
$$= A/3\sin(\omega t+2/3\pi)-2A/3\sin(\omega t)$$
$$= A/3\{\sin(\omega t+2/3\pi)-2\sin(\omega t)\}$$
$$= A/3\{\sin(\omega t)\cdot\cos(2/3\pi)$$
$$\quad +\cos(\omega t)\cdot\sin(2/3\pi)-2\sin(\omega t)\}$$
$$= A/3\{-5/2\sin(\omega t)+\sqrt{3}/2\cos(\omega t)\}$$
$$= A/3\{\sqrt{7}\sin(\omega t+\alpha)\}$$
$$= \sqrt{7}/3\,A\sin(\omega t+\alpha) \qquad\qquad \ldots(9)$$

It should be noted that $\alpha$ is expressed by $\alpha = \tan^{-1}(-\sqrt{3}/5)$, where the relationship $0 < \alpha < \pi$ holds.

Accordingly, the potential difference between the phase coil U2 and the phase coil V1 has an amplitude of $\sqrt{7}/3A$, and is $\sqrt{7}/3$ times as large as the applied voltage of each phase.

In Embodiment 2, as shown in FIG. 11, as the phase coil U2 and the phase coil W1 are in one slot 6, the maximum value of interwinding potential difference is $\sqrt{7}/3$ times as large as the applied voltage of each phase. Meanwhile, in the related-art motor, the maximum value of interwinding potential difference is $2\sqrt{3}/3$ times as large as the applied voltage of each phase. Accordingly, the maximum value of interwinding potential difference of Embodiment 2 is $\sqrt{7}/3 \div (2\sqrt{3}/3) = 0.763$ times larger than that of the case of the related-art winding scheme. The insulation distance can thus be shortened.

As noted above, in Embodiment 2, as in the case of Embodiment 1, the concentrated-winding Y-connected r-phase rotating electric machine is configured such that the ratio of the number of poles n to the number of slots m of the rotating electric machine is given as n : m = (3-1) : r. Further, the number s of phase coils of each phase connected in series is 3. Further, the coils of their respective phases are arranged around the teeth 3 such that the first coils, which are the highest in voltage in their respective phases, are not adjacent to each other in a circumferential direction.

This makes it possible to reduce the maximum value of interwinding potential difference and reduce the interwinding insulation distance. Further, this also makes it possible to reduce the size of an insulating paper, thus making it possible to increase the amounts of winding in the slots 6. This can result in a reduction in copper loss, bringing about improvement in efficiency of the rotating electric machine.

Embodiment 3

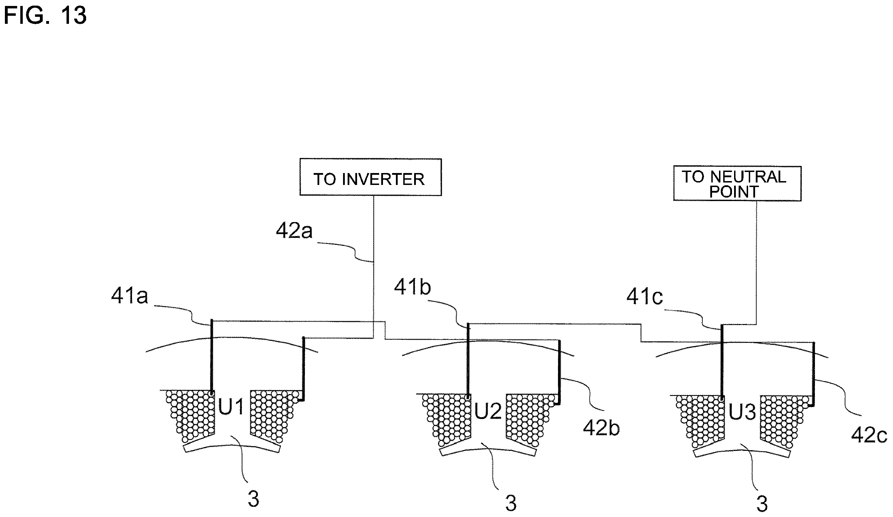

FIG. 13 shows a method for making connections around each tooth of a rotating electric machine according to Embodiment 3. FIG. 13 is a connecting diagram of a U-phase coil of the rotating electric machine according to Embodiment 3. Also in Embodiment 3, a concentrated-winding Y-connected three-phase motor 10 is described as an example of the rotating electric machine. As, in Embodiment 3, the configuration of the motor 10 and the connections among coils are similar to those of Embodiment 1 or 2, a description of the configuration of the motor 10 and the connections among coils is omitted here.

Embodiment 3 differs from Embodiment 1 in that whereas the winding head 41 of the coil 5 is closer to the inverter 31 than is the winding tail 42 of the coil 5, which is closer to the neutral point N than is the winding head 41 in Embodiment 1, the winding tail 42 of the coil 5 is closer to the inverter 31 than is the winding head 41 of the coil 5, which is closer to the neutral point N than is the winding tail 42 in Embodiment 3. Specifically, as shown in FIG. 13, the winding tail 42a of the phase coil U1 is connected to the inverter 31, and a winding head 41c of the phase coil U3 is connected to the neutral point N.

Further, the phase coil U1 and the phase coil U2 are configured such that the winding head 41a of the phase coil U1 and the winding tail 42b of the phase coil U2 are connected to each other. Further, the phase coil U2 and the phase coil U3 are configured such that the winding head 41b of the phase coil U2 and a winding tail 42c of the phase coil U3 are connected to each other. In Embodiment 3, the phase coil U1, the phase coil U2, and the phase coil U3 thus connected are connected in series to form the U-phase coil. In this case, as in the case of Embodiment 2, interwinding potential differences are calculated using Formulas (1) to (6).

First, in Embodiment 3, a maximum interwinding potential difference is reached, for example, between the winding head of U1 (potential $U_h$) and the winding head of V2 (potential $V_{a1}$), so the potential difference is expressed by Formula (10).

$$
\begin{aligned}
U_h - V_{a1} &= A\sin(\omega t + 2/3\pi) - 2/3 A\sin(\omega t) \\
&= A\{\sin(\omega t + 2/3\pi) - 2/3\sin(\omega t)\} \\
&= A\{\sin(\omega t)\cdot\cos(2/3\pi) + \cos(\omega t)\cdot \\
&\quad \sin(2/3\pi) - 2/3\sin(\omega t)\} \\
&= A\{-1/2\sin(\omega t) + \sqrt{3}/2\cos(\omega t) \\
&\quad -2/3\sin(\omega t)\} \\
&= A\{-7/6\sin(\omega t) + \sqrt{3}/2\cos\omega t\} \\
&= \sqrt{19}/3\, A\sin(\omega t + \beta) \qquad\qquad \ldots(10)
\end{aligned}
$$

It should be noted that $\beta$ is expressed by $\beta = \tan^{-1}(-3\sqrt{3}/7)$, where the relationship $0 < \beta < \pi$ holds.

Then, in the case of Embodiment 3, the interwinding potential difference ($U_h - V_{a1}$) is $\sqrt{19}/3$ times, that is, 1.453 times, as large as the applied voltage of each phase. Meanwhile, in the case of the related-art winding scheme shown in FIG. 12 above, the interwinding potential difference ($U_h - V_h$) is $\sqrt{3}$ times, that is, 1.732 times, as large as the applied voltage of each phase. Even in a case shown in Embodiment 3 where the winding head and the winding tail are inverted, the interwinding potential difference can be reduced to $\sqrt{57}/9$ times, that is, 0.839 times, as in the cases of Embodiments 1 and 2.

Furthermore, in comparison with Embodiment 2, the configuration of Embodiment 3 brings about an effect of reducing a leakage current in a band of several hundred kilohertz to several megahertz in the presence of the application of a high-frequency voltage to the coil 5.

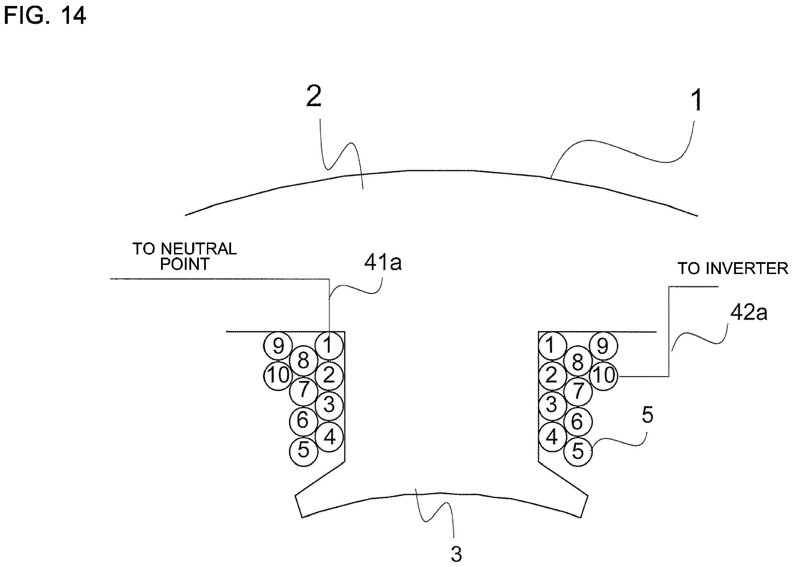

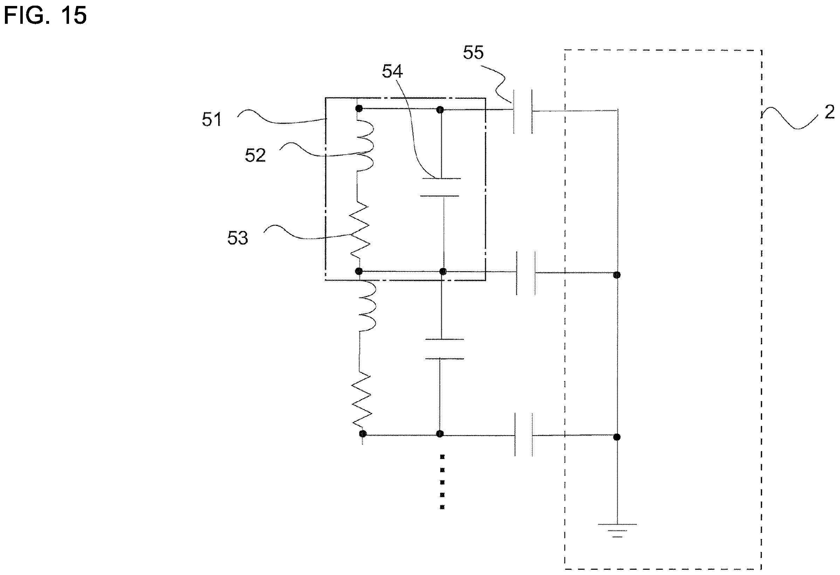

The principle of generation of a leakage current is explained here. FIG. 14 shows a case where the number of turns one tooth 3 is wound is 10. Note here that the numbers 1 to 10 represent the first turn, and the second turn to the tenth turn in sequence starting from the winding head of the coil 5. The term "leakage current" refers to a current that is passed from the coil 5 of the stator 1 to the stator core 2 in a case where the stator core 2 is earthed by grounding. FIG. 15 shows an equivalent circuit from the coil 5 to the stator core 2. As shown in FIG. 15, an equivalent circuit 51 of one turn can be expressed by a coil resistance 53 of one turn, an inductance 52 of one turn, and a capacitance 54 of one turn.

Further, as the stator core 2 and the coil 5 are capacitively coupled, a capacitance 55 is formed between the coil 5 and the stator core 2. At this point in time, an alternating current flowing through the coil 5 causes a current to flow from the coil 5 to the stator core 2 depending on the magnitude of the capacitance 55 between the coil 5 and the stator core 2. This is a leakage current.

In accordance with Coulomb's law, when the capacitance 55 is large, there is more charge even in the presence of the application of the same voltage. As the current is obtained by differentiating the charge, the leakage current increases.

A case where a voltage with a low frequency of, for example, several hundred hertz is applied to the coil 5 is described here. First, the impedance ZL, which appears in an inductance 52 portion, is expressed by $ZL = \omega L$, where L is the inductance and $\omega$ is the angular frequency. Meanwhile, the impedance at the capacitance 54 between coils 5 is expressed by $ZC = 1/\omega C$.

In the case of a low frequency, the relationship $ZL < ZC$ holds, as $\omega$ is small. At this point in time, a constant potential difference is applied to each coil 5, as the turns are substantially equal in length and interwinding distance of one turn of the coil 5. Therefore, the capacitance 54 of each coil 5 can be expressed by the distance and axial length between the coil 5 and the stator core 2.

On the other hand, a case where a voltage with a high frequency of, for example, several hundred kilohertz is applied to the coil 5 is described. In the case of a high frequency, the relationship $ZL > ZC$ holds, as $\omega$ is large. At this point in time, there is an increase in induced electromotive force that is generated at the inductance 52 of the coil 5. This leads to a big drop in voltage at the first turn, which is close to the inverter 31. The potential difference between coils 5 increases toward the inverter 31 and decreases away from the inverter 31.

Accordingly, the leakage current in this case depends on the magnitude of the capacitance of a high-voltage coil that is close to the inverter 31. Note here that in a case where a winding head of the coil 5 is connected to the inverter 31, the distance between the stator core 2 and the coil 5 is determined by an insulator that is used as an insulating coating of the coil 5 and an insulation protection of the coil 5.

As mentioned above, in Embodiment 3, the inverter 31 is connected to the winding tail 42a of the coil 5. That is, in Embodiment 3, the coil 5 in the slot central part represented by the number "10" of FIG. 14 is connected to the inverter 31. Therefore, the distance between the tooth 3 of the stator core 2 and the coil 5 is greater at the winding tail 42a than at the winding head 41a. This causes the capacitance 54 to decrease. As the leakage current is proportional to the magnitude of the capacitance 54, Embodiment 3 can better reduce the leakage current than Embodiment 1.

Embodiment 4

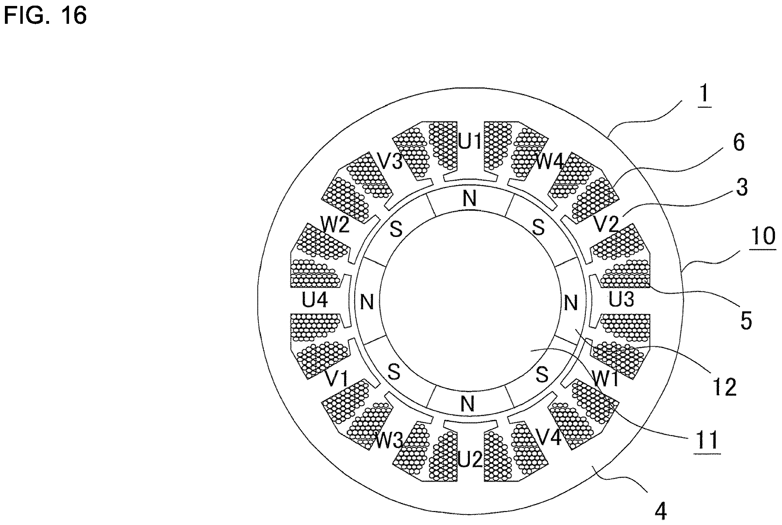

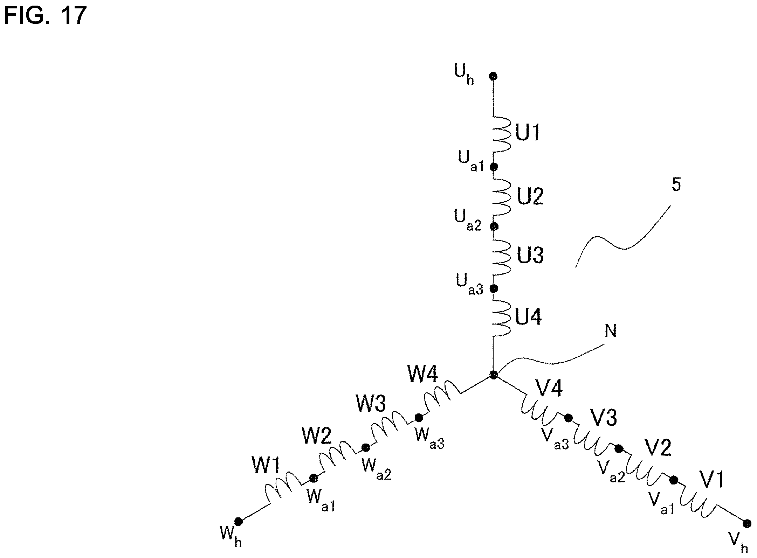

FIG. 16 is a cross-sectional view of a rotating electric machine according to Embodiment 4. FIG. 17 is a connecting diagram of the rotating electric machine according to Embodiment 4. In FIG. 17, as in the case of Embodiment 2, the potential $U_h$, the potential $U_{a1}$, the potential $U_{a2}$, and the potential $U_{a3}$ are defined as the input-side potential of the phase coil U1, the potential between the phase coil U1 and the phase coil U2, the potential between the phase coil U2 and the phase coil U3, and the potential between the phase coil U3 and the phase coil U4, respectively. The same applies to the V phase and the W phase.

Also in Embodiment 4, a concentrated-winding Y-connected three-phase motor 10 is described as an example of the rotating electric machine. As, in Embodiment 4, the configuration of the motor 10 and the connections among coils are similar to those of Embodiments 1 to 3, a description of the configuration of the motor 10 and the connections among coils is omitted here.

As shown in FIG. 16, in Embodiment 4, an example is described where an eight-pole and twelve-slot motor 10 in which the number of poles n is 8 and the number of slots m is 12. Accordingly, also in Embodiment 4, the ratio of the number of poles n to the number of slots m is given as $n : m = (3-1) : r$, where r is the number of phases. Further, FIG. 17 illustrates a case where the number s of phase coils of each phase connected in series is 4. In Embodiment 4, as shown in FIG. 17, the fourth coils of the phases U, V, and W, namely the phase coil U4, the phase coil V4, and the phase coil W4, are each connected to the neutral point N to form a Y connection.

Further, in Embodiment 4, as shown in FIG. 16, the coil 5 is wound around the teeth 3 in the order of the phase coils U1, V3, W2, U4, V1, W3, U2, V4, W1, U3, V2, W4, and then U1 counterclockwise.

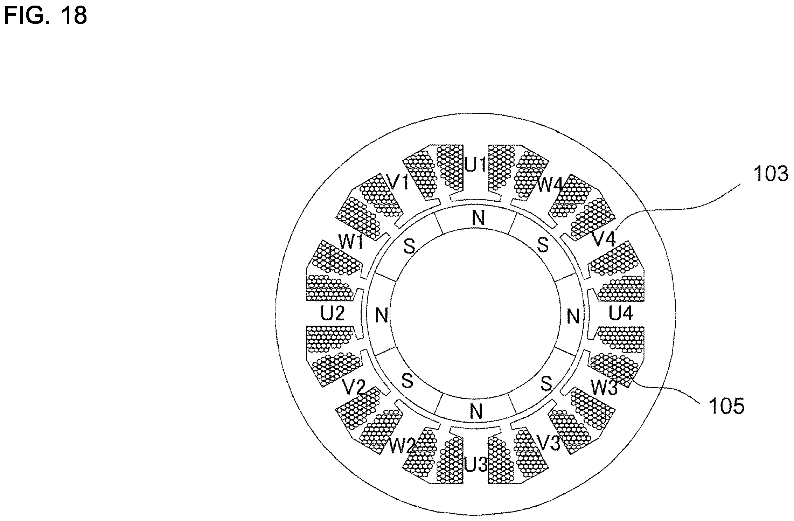

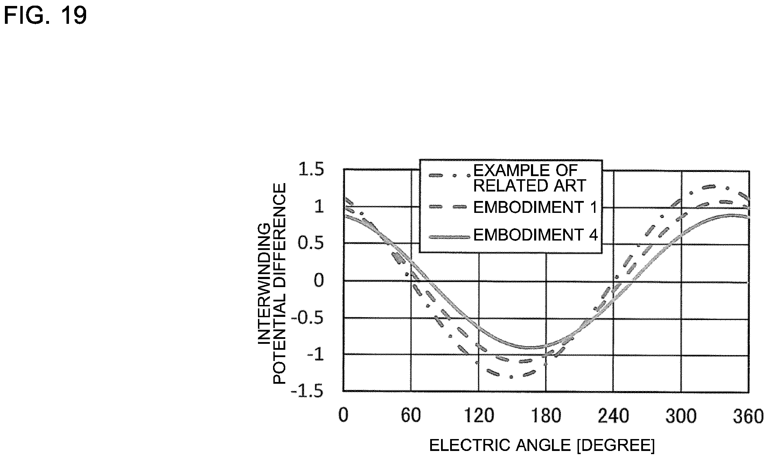

Interwinding potential differences among slots in the cases of the related-art connecting method shown in FIG. 18, Embodiment 1, and Embodiment 4 are described here with reference to FIG. 19. In FIG. 19, the horizontal axis shows electric angles, and the vertical axis shows interwinding potential differences. Further, in FIG. 19, the dot-and-dash line, the dotted line, and the solid line represent the example of related art, Embodiment 1, and Embodiment 4, respectively. For simplicity, in the description here, a winding head of the coil 5 is closer to the inverter 31 than is a winding tail.

First, the case of the related-art connection results in a cross-sectional view such as that shown in FIG. 18. That is, the coil 105 is wound around the teeth 103 in the order of phase coils U1, V1, W1, U2, V2, W2, U3, V3, W3, U4, V4, W4, and then U1 counterclockwise. Accordingly, for example, as in the case of the phase coils U1 and V1, high-voltage phase coils are adjacent to each other in one slot, and the potential difference is given as Uai-Vai. As $U_h$ and $V_h$ are expressed by Formulas (1) and (2), respectively, the potential difference between $U_{a1}$ and $V_{a1}$ is expressed by Formula (11).

$$\begin{aligned} U_{a1} - V_{a1} \\ = 3/4A\{\sin(\omega t + 2/3\pi) - \sin(\omega t)\} \\ = 3\sqrt{3}/4A\sin(\omega t + \pi/3) \qquad \ldots(11) \end{aligned}$$

Therefore, as shown in FIG. 19, the maximum value of interwinding potential difference is $3\sqrt{3}/4$ times, that is, 1.299 times, as large as the phase voltage.

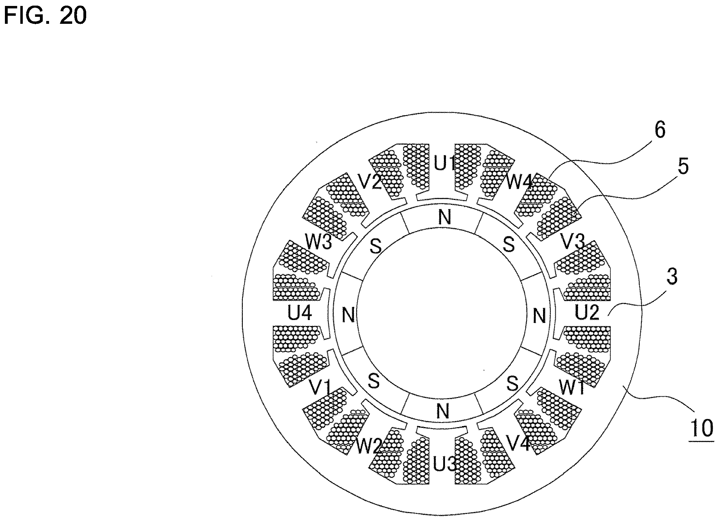

Meanwhile, the application of the connecting method of Embodiment 1 to an eight-pole and twelve-slot motor 10 results in a cross-sectional view shown in FIG. 20. That is, the coil 5 is wound around the teeth 3 in the order of phase coils U1, V2, W3, U4, V1, W2, U3, V4, W1, U2, V3, W4, and then U1 counterclockwise. In this case, the place with the largest potential difference is for example between U1 and V2, that is, the largest potential difference is the potential difference between $U_{a1}$ and $V_{a2}$. Accordingly, when calculated in a way similar to the related-art case shown in Formula (11) above, the potential difference is expressed by Formula (12).

$$\begin{aligned} U_{a1} - V_{a2} \\ = 3/4A\sin(\omega t + 2/3\pi) - 1/2A\sin(\omega t) \\ = 3/4A\{\sin(\omega t)\cdot\cos(2/3\pi) \\ + \cos(\omega t)\cdot\sin(2/3\pi)\} \\ - 1/2A\sin(\omega t) \\ = 3/4A\{-1/2\sin(\omega t) + \sqrt{3}/2\cos(\omega t)\} \\ - 1/2A\sin(\omega t) \\ = -3/8A\sin(\omega t) + 3\sqrt{3}/8A\cos(\omega t) \\ - 1/2A\sin(\omega t) \\ = -7/8A\sin(\omega t) + 3\sqrt{3}/8A\cos(\omega t) \\ = \sqrt{19}/4A\sin(\omega t + \beta) \qquad \ldots(12) \end{aligned}$$

It should be noted that $\beta$ is expressed by $\beta = \tan^{-1}(-3\sqrt{3}/7)$, where the relationship $0 < \beta < \pi$ holds.

As a result, as shown in FIG. 19, the maximum value of interwinding potential difference is $\sqrt{19}/4$ times, that is, 1.089 times, as large as the phase voltage.

Further, in the configuration of Embodiment 4 shown in FIG. 16, the place with the largest potential difference is between U1 and V3, so that the largest potential difference is the potential difference between $U_{a1}$ and $V_{a3}$. Accordingly, when calculated in a way similar to the case of the related-art connecting method shown in Formula (11) above and the case of the connecting method of Embodiment 1 shown in Formula (12) above, the potential difference is expressed by Formula (13).

$$U_{a1}-V_{a3}$$
$$= 3/4A\sin(\omega t+2/3\pi)-1/4A\sin(\omega t)$$
$$= 3/4A\{\sin(\omega t)\cdot\cos(2/3\pi)$$
$$+\cos(\omega t)\cdot\sin(2/3\pi)\}-1/4A\sin(\omega t)$$
$$= 3/4A\{-1/2\sin(\omega t)+\sqrt{3}/2\cos(\omega t)\}$$
$$-1/4A\sin(\omega t)$$
$$= -3/8A\sin(\omega t)+3\sqrt{3}/8A\cos(\omega t)$$
$$-1/4A\sin(\omega t)$$
$$= -5/8A\sin(\omega t)+3\sqrt{3}/8A\cos(\omega t)$$
$$= \sqrt{13}/4A\sin(\omega t+\gamma) \qquad\qquad \ldots(13)$$

It should be noted that $\gamma$ is expressed by $\gamma = \tan^{-1}(-3\sqrt{3}/5)$, where the relationship $0 < \gamma < \pi$ holds.

As a result, as shown in FIG. 19, the maximum value of interwinding potential difference is $\sqrt{13}/4$ times, that is, 0.901 times, as large as the phase voltage. Accordingly, the maximum value of potential difference of Embodiment 4 is the smallest in the graph of FIG. 19. Whereas the phase coils U1 and V2 are adjacent to each other in Embodiment 1, the phase coils U1 and V3 are adjacent to each other in Embodiment 4. As the phase coil V3 is lower in voltage than the phase coil V2, Embodiment 4 can make the maximum value of interwinding potential difference even smaller accordingly than Embodiment 1.

Generalizing the connecting method according to Embodiment 4 gives the following expression. A case is discussed where s is the number of phase coils connected in series in each phase. Note here that s is a natural number of 4 or larger. Then, a case is discussed where k is a maximum natural number of s/2 or smaller. Of the phase coils of each phase, a kth coil, a (k-1)th coil to a first coil are connected so as not to be adjacent to each other. The following illustrates the example.

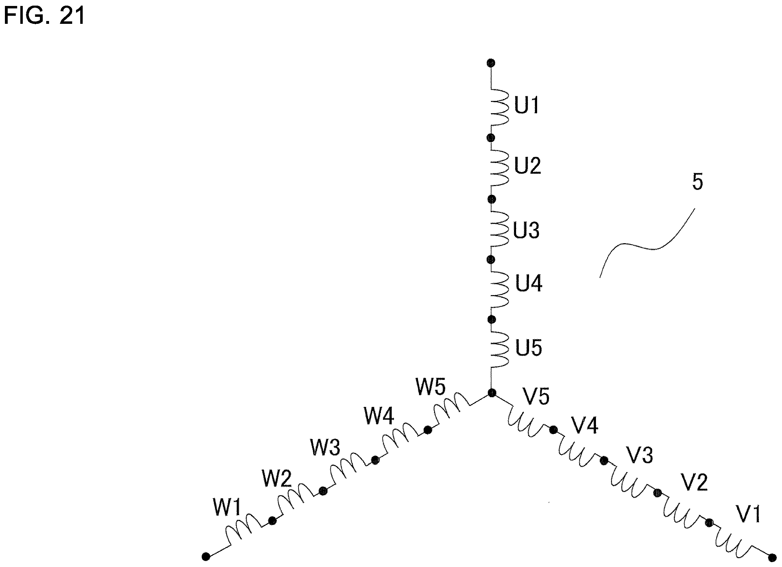

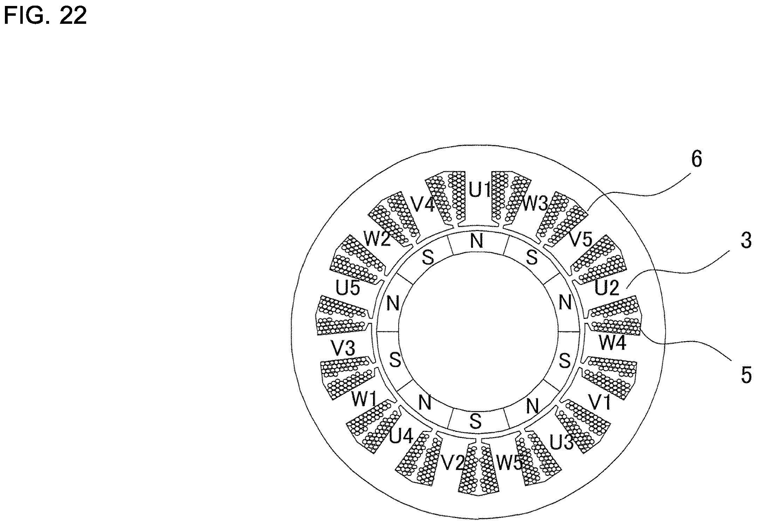

First, for example, as shown in FIG. 21, in a case where the number s of coils connected in series is 5, the maximum natural number k of s/2 or smaller is 2. Accordingly, the coil 5 is wound such that the second coil and the first coil of each phase are not adjacent to each other. An example of the case is shown in FIG. 22. That is, the coil 5 is wound around the teeth 3 in the order of phase coils U1, V4, W2, U5, V3, W1, U4, V2, W5, U3, V1, W4, U2, V5, W3, and then U1 counterclockwise.

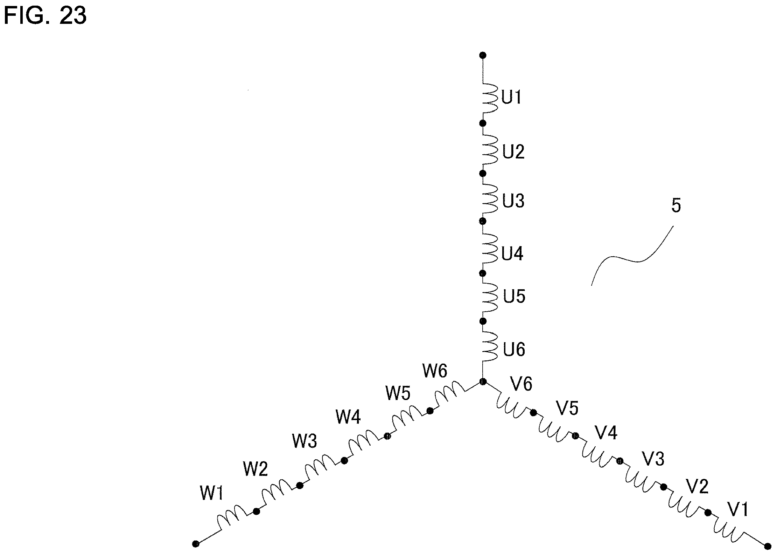

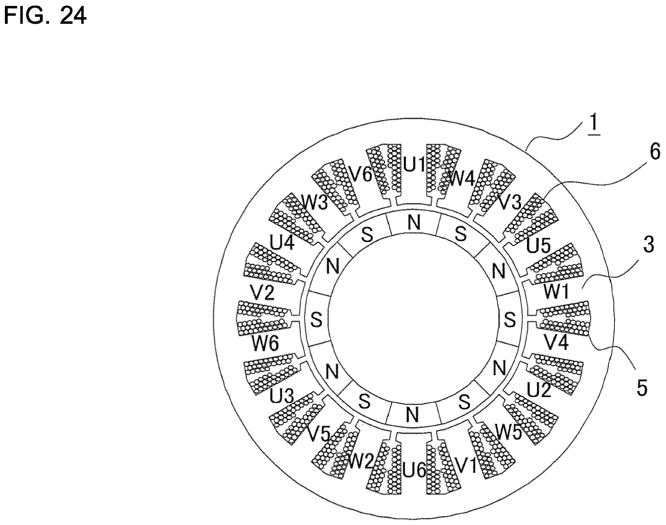

Further, for example, as shown in FIG. 23, in a case where the number s of phase coils connected in series is 6, the maximum natural number k of s/2 or smaller is 3. Accordingly, the coil 5 is wound such that the third coil, the second coil, and the first coil of each phase are not adjacent to each other. An example of the case is shown in FIG. 24. That is, the coil 5 is wound around the teeth 3 in the order of phase coils U1, V6, W3, U4, V2, W6, U3, V5, W2, U6, V1, W5, U2, V4, W1, U5, V3, W4, and then U1 counterclockwise.

In this way, when the number of phase coils connected in series is s and k is a maximum natural number of s/2 or smaller, connections are made such that none of the phase coils of each phase from the kth coil, which is the kth highest in voltage in the phase, to the first coil, which is the highest in voltage in the phase, are adjacent to each other. This makes it possible to reduce the interwinding potential difference. It should be noted that Embodiment 4 brings about similar results even when a winding tail of the coil 5 is closer to the inverter 31 than is a winding head as shown in Embodiment 3.

Embodiment 5

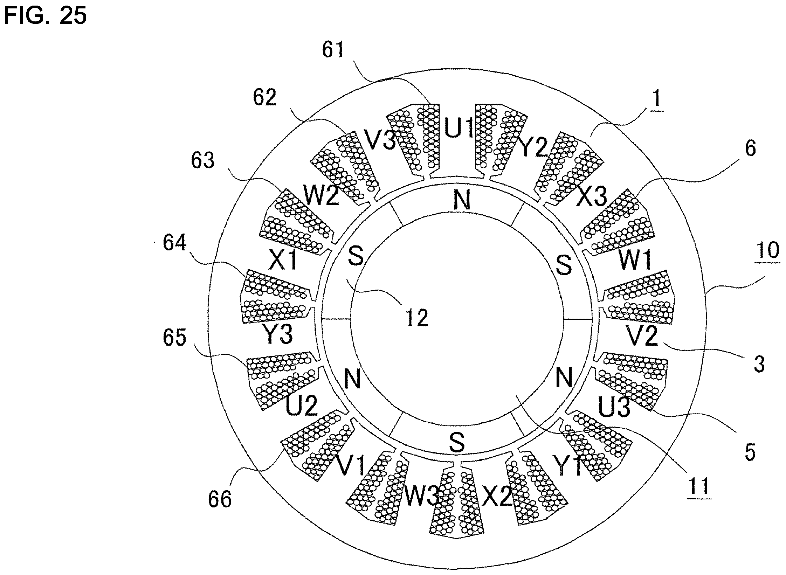

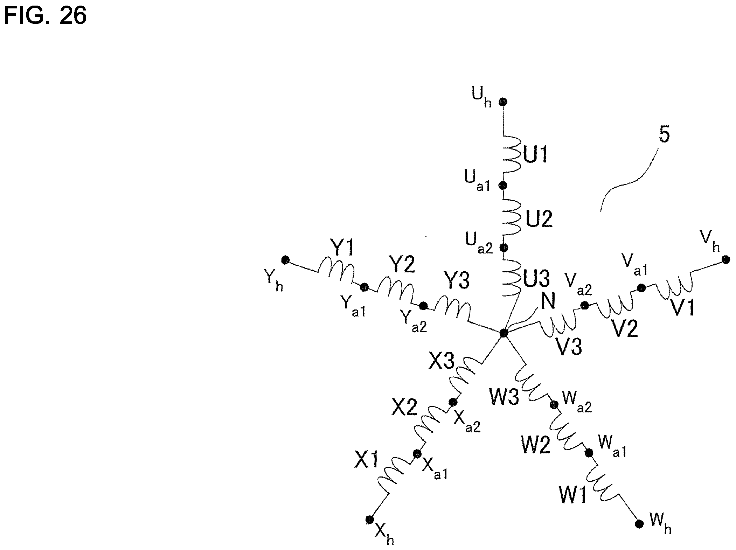

FIG. 25 is a cross-sectional view of a rotating electric machine according to Embodiment 5. FIG. 26 is a connecting diagram of the rotating electric machine according to Embodiment 5. Also in Embodiment 5, a motor 10 is described as an example of the rotating electric machine. In FIG. 26, as in the cases of Embodiment 1 and Embodiment 2, the potential $U_h$, the potential $U_{a1}$, and the potential $U_{a2}$ are defined as the input-side potential of the phase coil U1, the potential between the phase coil U1 and the phase coil U2, and the potential between the phase coil U2 and the phase coil U3, respectively. The same applies to the V phase, the W phase, an X phase, and a Y phase. As, in Embodiment 5, the configuration of the motor 10 and the connections among coils are similar to those of Embodiments 1 to 4, a description of the configuration of the motor 10 and the connections among coils is omitted here.

While Embodiments 1 to 4 have illustrated three-phase rotating electric machines, Embodiment 5 illustrates a five-phase rotating electric machine as shown in FIG. 25. The phases are hereinafter referred to as "U phase", "V phase, "W phase, "X phase", and "Y phase".

As shown in FIG. 25, in Embodiment 5, an example is described where a six-pole and fifteen-slot motor 10 in which the number of poles n is 6 and the number of slot m is 15. Accordingly, also in Embodiment 5, the ratio of the number of poles n to the number of slots m is given as n : m = (3-1) : r, where r is the number of phases. Further, FIG. 26 illustrates a case where the number s of phase coils connected in series is 3. In Embodiment 5, as shown in FIG. 26, the third coils of the phases U, V, W, X, and Y, namely the phase coil U3, the phase coil V3, the phase coil W3, the phase coil X3, and the phase coil Y3, are each connected to the neutral point N to form a Y connection.

In Embodiment 5, as shown in FIG. 25, the coil 5 is wound around the teeth 3 in the order of the phase coils U1, V3, W2, X1, Y3, U2, V1, W3, X2, Y1, U3, V2, W1, X3, Y2, and then U1 counterclockwise.

In FIG. 25, the first coils, which are the highest in voltage in their respective phases, namely the phase coils U1, V1, W1, X1, and Y1, are alternately arranged so as not to be adjacent to each other in a circumferential direction. That is, in a case where a first coil of one phase is disposed in one slot, a first coil of another phase is disposed not in an adjacent slot but in a slot next to the adjacent slot. Specifically, as the phase coil U1 is disposed in a slot 61, no first coil of any phase is disposed in a slot 62. Moreover, the phase coil X1 is disposed in a slot 63 next to the slot 62. Further, as the phase coil X1 is disposed in a slot 64, no first coil of any phase is disposed in an adjacent slot 65. Moreover, the phase coil V1 is disposed in a slot 66 next to the slot 65.

In Embodiment 5, a five-phase motor can be expressed by sinusoidal voltages whose phases are equal in amplitude to each other and different by 72 degrees from each other. Accordingly, the potentials ($U_h$, $V_h$, $W_h$, $X_h$, and $Y_h$) of the phases are expressed by Formulas (14) to (18).

$$U_h = A\sin(\omega t + 4/5\pi) \qquad \qquad \ldots(14)$$

$$V_h = A\sin(\omega t + 2/5\pi) \qquad \qquad \ldots(15)$$

$$W_h = A\sin(\omega t) \qquad \qquad \ldots(16)$$

$$X_h = A\sin(\omega t - 2/5\pi) \qquad \qquad \ldots(17)$$

$$Y_h = A\sin(\omega t - 4/5\pi) \qquad \qquad \ldots(18)$$

Note here that in a case where a winding head of the coil 5 is connected to the inverter 31, the interwinding potential difference (between $U_{a1}$ and $Y_{a2}$) in the slot 6 can be expressed by Formula (19).

$$
\begin{aligned}
U_{a1} - Y_{a2} &= 2/3 U_h - 1/3 Y_h \\
&= 2/3 A\sin(\omega t + 4/5\pi) \\
&\quad -1/3 A\sin(\omega t - 4/5\pi) \\
&= 2/3 A\{\sin(\omega t)\cos(4/5\pi) \\
&\quad +\cos(\omega t)\sin(4/5\pi)\} \\
&\quad -1/3 A\{\sin(\omega t)\cos(4/5\pi) \\
&\quad -\cos(\omega t)\sin(4/5\pi)\} \\
&= 1/3 A\sin(\omega t)\cos(4/5\pi) \\
&\quad +A\cos(\omega t)\sin(4/5\pi) \\
&= A\{1/3\cos(4/5\pi)\sin(\omega t) \\
&\quad +\sin(4/5\pi)\cos(\omega t)\} \\
&= 0.6467 A\sin(\omega t + \zeta) \qquad \qquad \ldots(19)
\end{aligned}
$$

$\zeta$ is expressed by $\zeta = \tan^{-1}(3\tan(4/5\pi))$, where the relationship $0 < \zeta < \pi$ holds.

Accordingly, the interwinding potential difference in Embodiment 5 is 0.6467 times as large as the phase voltage.

Meanwhile, in such a related-art case where high-voltage phase coils are adjacent to each other in a circumferential direction, the interwinding potential difference (between $U_{a1}$ and $Y_{a1}$) can be expressed by Formula (20).

$$
\begin{aligned}
U_{a1}-Y_{a2} &= 2/3U_h - 2/3Y_h \\
&= 2/3A\sin(\omega t + 4/5\pi) \\
&\quad -2/3A\sin(\omega t - 4/5\pi) \\
&= 2/3A\{\sin(\omega t)\cos(4/5\pi) \\
&\quad +\cos(\omega t)\sin(4/5\pi)\} \\
&\quad -2/3A\{\sin(\omega t)\cos(4/5\pi) \\
&\quad -\cos(\omega t)\sin(4/5\pi)\} \\
&= 4/3A\cos(\omega t)\sin(4/5\pi) \\
&= 0.7837A\cos(\omega t) \quad\quad\quad \ldots(20)
\end{aligned}
$$

This is 0.7837 times as large as the applied voltage of each phase. Accordingly, Embodiment 5 can make the maximum value of interwinding potential difference 0.825 times smaller than the related-art scheme.

As noted above, in Embodiment 5, as in the cases of Embodiments 1 to 4, the concentrated-winding Y-connected r-phase rotating electric machine is configured such that the ratio of the number of poles n to the number of slots m of the rotating electric machine is given as n : m = (3-1) : r. Further, the number s of phase coils of each phase connected in series is 3. Note, however, that the number s of phase coils is not limited to 3. Further, the coils of their respective phases are arranged around the teeth 3 such that the first coils, which are the highest in voltage in their respective phases, are not adjacent to each other in a circumferential direction.

This makes it possible to reduce the maximum value of interwinding potential difference and reduce the interwinding insulation distance. Further, this also makes it possible to reduce the size of an insulating paper, thus making it possible to increase the amounts of winding in the slots 6. This can result in a reduction in copper loss, bringing about improvement in efficiency of the rotating electric machine.

Embodiment 6

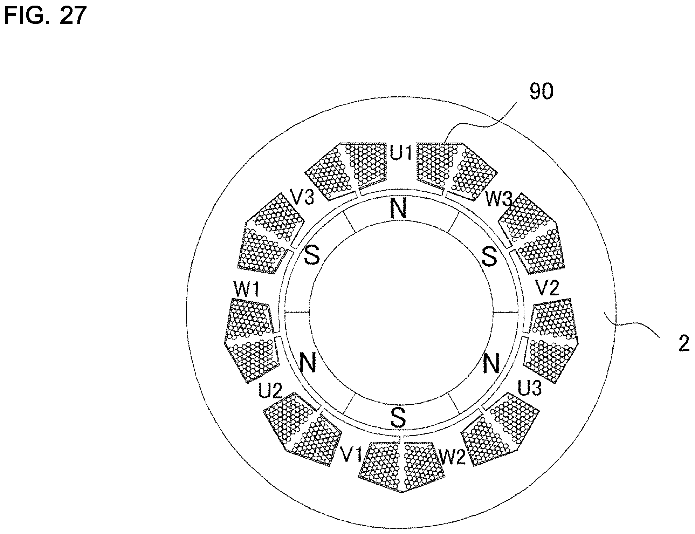

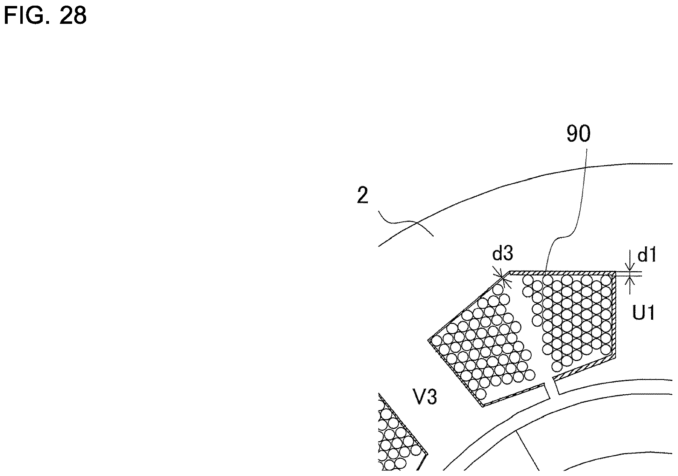

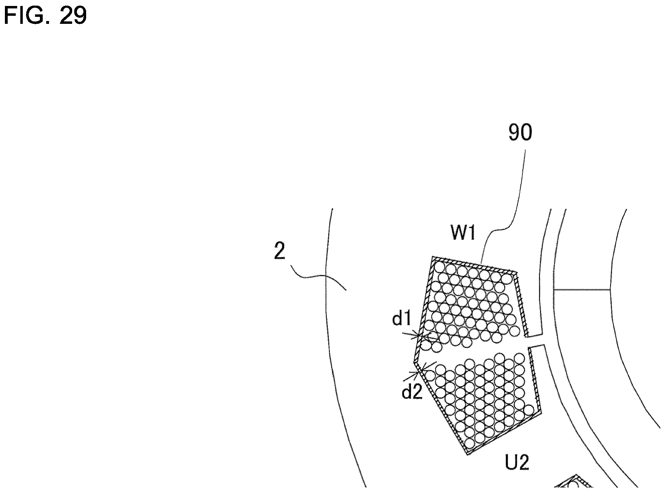

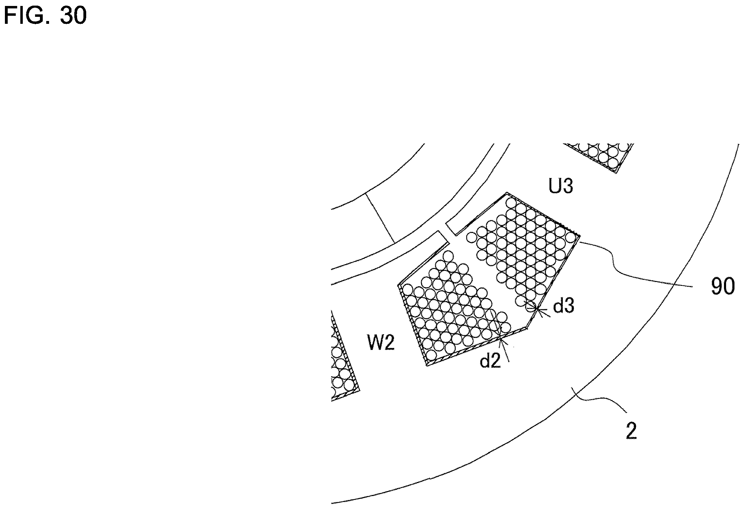

FIG. 27 is a cross-sectional view of a rotating electric machine according to Embodiment 6. Figs. 28, 29, and 30 are enlarged views including portions between the U1 phase and the V3 phase, the W1 phase and the U2 phase, and the W2 phase and the U3 phase shown in FIG. 27, respectively. Whereas an insulating part between the coil 5 and the stator core 2 is omitted in Embodiments 1 to 5, an insulating part 90 is provided between the coil 5 and the stator core 2 in Embodiment 6. The method for connecting the coil 5 here is identical to that shown in FIG. 10.

As in the case of Embodiment 2, the first coils of their respective phases, namely the phase coils U1, V1, and W1, are connected to the inverter 31, and the third coils of their respective phases, namely the phase coils U3, V3, and W3, are connected to the neutral point N to form a Y connection.

At this point in time, the first coils of their respective phases, namely the phase coils U1, V1, and W1, are coils to which the highest voltage is applied. Then, the second coils, namely the phase coils U2, V2, and W2, are coils to which the second highest voltage is applied. Further, the third coils, namely the phase coils U3, V3, and W3, are coils to which the lowest voltage is applied. In this way, there are gradual reductions in applied voltage away from the first coils via the second coils toward the third coils.

Accordingly, the phase coils U1, V1, and W1, which are the first coils, need to be placed at the longest insulation distance from the stator core 2, and the insulation distance from the stator core 2 can be gradually reduced away from the second coils toward the third coils. Therefore, in Embodiment 6, as shown in Figs. 28 to 30, the insulation distances d1, d2, and d3 from the stator core 2 are set as follows. First, d1 is set as the insulation distance between the phase coils U1, V1, and W1, which are the first coils, and the stator core 2. Further, d2 is set as the insulation distance between the phase coils U2, V2, and W2, which are the second coils, and the stator core 2.

Further, d3 is set as the insulation distance between the phase coils U3, V3, and W3, which are the third coils, and the stator core 2. Then, the insulation distances d1, d2, and d3 are set as appropriate such that the relationship d1 > d2 > d3 holds. This makes it possible to make the insulation distance d2 of the second coils and the insulation distance d3 of the third coils smaller than the insulation distance d1 of the first coils, making it possible to increase space in the second and third coils where the coil 5 is wound.

Although Embodiment 6 shows diagrams of windings of a coil of the same wire diameter, gradually increasing the wire diameter of the coil in the order of the first coils, the second coils, and then the third coils makes it possible to lower the value of resistance of the coil, making it possible to reduce a copper loss.

Further, a method for ensuring the insulation distances d1, d2, and d3 with high accuracy includes preparing three types of insulating part 90 each suitable to a corresponding one of the first coils, the second coils, and the third coils, to make the thicknesses of the insulating parts 90 equal in value to the insulation distances d1, d2, and d3. Moreover, by providing the insulating parts 90 each between the coil 5 and the stator core 2 suitable to the first coils, the second coils, and the third coils, the desired insulation distances d1, d2, and d3 can be ensured.

As other components and actions are the same as those of Embodiments 1 to 5, a description of the other components and actions is omitted here.

As noted above, in Embodiment 6, the distance between each of the teeth 3 and one end of the coil 5 wound around the tooth 3 that is close to the inverter 31 is longer than the distance between the tooth 3 and the other end of the coil 5 wound around the tooth 3. This makes it possible to increase winding space for the coil 5 toward the neutral point N. Further, gradually increasing the wire diameter of the coil in the order of the first coils, the second coils, and then the third coils makes it possible to lower the value of resistance of the coil, making it possible to reduce a copper loss.

Embodiments 1 to 6 have each illustrated a case where the ratio of the number of poles n to the number of slots m is given as n : m = (3-1) : r = 2 : r, where r is the number of phases of the rotating electric machine. However, without being limited to this case, Embodiments 1 to 6 are also applicable to a case where n : m = (3+1) : r = 4 : r. The following specifically describes a case where the ratio of the number of poles to the number of slots is 4 : r.

When the relationship r = 3 holds in a case where the ratio of the number of poles to the number of slots is 4 : r, the relationship holds if the coils of any two phases are swapped. Further, when the relationship r = 5 holds, the rotating electric machine works if the V phase and the Y phase are swapped and the W phase and the X phase are swapped. Therefore, even in a case where the ratio of the number of poles n to the number of slots m is given as n : m = 4 : r, interwinding potential differences among slots can be reduced with the configurations of Embodiments 1 to 6.

Further, Embodiments 1 to 6 have each illustrated a configuration in which the permanent magnets 12 are disposed on the surface of the rotor 11. However, this is not intended to impose any limitation. The permanent magnets 12 may be arranged in another configuration, as long as the number of poles of magnets is the same as the examples shown in Embodiments 1 to 6.

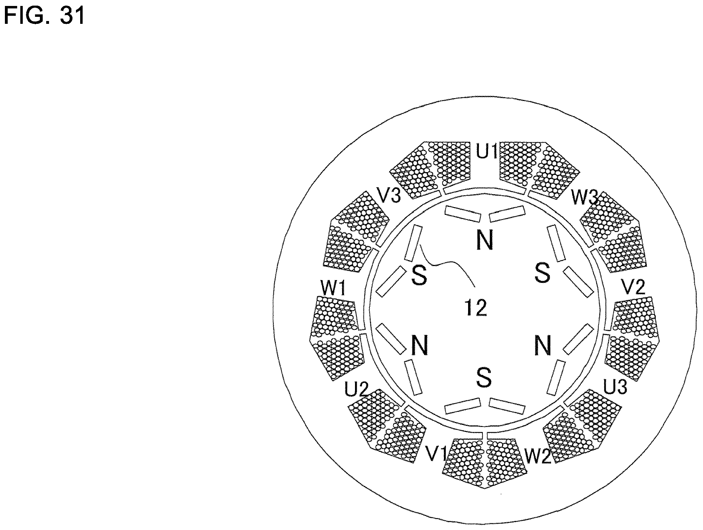

Specifically, for example, as shown in FIG. 31, a configuration may be set up in which the permanent magnets 12 are buried in one end face of the rotor 11. Although, in FIG. 31, two magnets are arranged in a V configuration per pole, the arrangement and the number of magnets per pole is not limited to any particular arrangement or number, as long as the number of poles is the same. Further, in any configuration, the winding configuration shown in Embodiments 1 to 6 of course brings about similar effects.

List of Reference Signs

1 stator
2 stator core
3 tooth
4 core back
5 coil
10 motor
11 rotor
12 permanent magnet
31 inverter
32 capacitor
33 power source
41 coil winding head
42 coil winding tail
51 equivalent circuit
52 inductance
53 resistance
54 capacitance
55 capacitance
90 insulating part

**Claims**

1. A rotating electric machine, comprising:

   - a rotor; and
   - a stator placed at a clearance from an outer circumference of the rotor,
   - the rotor having n permanent magnets arranged in a circumferential direction, the stator including m teeth arranged in a circumferential direction, m slots each formed between two adjacent ones of the teeth, and coils of r phases wound around the teeth,
   - each of the coils of the r phases being composed of s phase coils connected in series in sequence from a first phase coil to an sth phase coil, the coils of the r phases being Y-connected such that the sth phase coils of respective phases are connected to a neutral point,
   - a ratio of the number of poles n of the permanent magnets to the number of slots m of the slots being given as n : m = (3±1) : r,
   - r being a natural number of 3 or larger,
   - n, m, and s being each a natural number of 2 or larger,
   - the first phase coils of respective phases being arranged so as not to be adjacent to each other in a circumferential direction.

2. The rotating electric machine of claim 1,
   wherein a distance between the first phase coil of each of the phases and a corresponding one of the teeth is larger than a distance between the sth phase coil of the phase and the corresponding one of the teeth.

3. The rotating electric machine of claim 1 or 2,
   wherein, in a case where the number of poles n of the permanent magnets is 4, the number of slots m is 6, the number of phases r of the coils is 3, and the number s of the phase coils connected in series is 2, and a case where U1 is a first phase coil of a U phase, U2 is a second phase coil of the U phase, V1 is a first phase coil of a V phase, V2 is a second phase coil of the V phase, W1 is a first phase coil of a W phase, and W2 is a second phase coil of the W phase, the phase coils are wound around the teeth in an order of U1, V2, W1, U2, V1, W2, and then U1 counterclockwise.

4. The rotating electric machine of claim 1 or 2,
   wherein, in a case where the number of poles n of the permanent magnets is 6, the number of slots m is 9, the number of phases r of the coils is 3, and the number s of the phase coils connected in series is 3, and a case where U1 is a first phase coil of a U phase, U2 is a second phase coil of the U phase, U3 is a third phase coil of the U phase, V1 is a first phase coil of a V phase, V2 is a second phase coil of the V phase, V3 is a third phase coil of the V phase, W1 is a first phase coil of a W phase, W2 is a second phase coil of the W phase, and W3 is a third phase coil of the W phase, the phase coils are wound around the teeth in an order of U1, V3, W1, U2, V1, W2, U3, V2, W3, and then U1 counterclockwise.

5. The rotating electric machine of claim 1 or 2,
   wherein, in a case where the number of poles n of the permanent magnets is 6, the number of slots m is 15, the number of phases r of the coils is 5, and the number s of the phase coils connected in series is 3, and a case where U1 is a first phase coil of a U phase, U2 is a second phase coil of the U phase, U3 is a third phase coil of the U phase, V1 is a first phase coil of a V phase, V2 is a second phase coil of the V phase, V3 is a third phase coil of the V phase, W1 is a first phase coil of a W phase, W2 is a second phase coil of the W phase, W3 is a third phase coil of the W phase, X1 is a first phase coil of an X phase, X2 is a second phase coil of the X phase, X3 is a third phase coil of the X phase, Y1 is a first phase coil of a Y phase, Y2 is a second phase coil of the Y phase, and Y3 is a third phase coil of the Y phase, the phase coils are wound around the teeth in an order of U1, V3, W2, X1, Y3, U2, V1, W3, X2, Y1, U3, V2, W1, X3, Y2, and then U1 counterclockwise.

6. The rotating electric machine of claim 1 or 2,
   wherein, in a case where the number s of the phase coils connected in series is 4 or larger, and a case where k is a maximum natural number of s/2 or smaller, the phase coils of each phase are arranged such that the phase coils of each phase from a kth coil that is kth highest in voltage of the phase coils of each phase to a first coil that is highest in voltage of the phase coils of each phase are not adjacent to each other in a circumferential direction.

7. The rotating electric machine of claim 6,

wherein, in a case where the number of poles n of the permanent magnets is 8, the number of slots m is 12, the number of phases of the coils is 3, and the number s of the phase coils connected in series is 4, and a case where U1 is a first phase coil of a U phase, U2 is a second phase coil of the U phase, U3 is a third phase coil of the U phase, U4 is a fourth phase coil of the U phase, V1 is a first phase coil of a V phase, V2 is a second phase coil of the V phase, V3 is a third phase coil of the V phase, V4 is a fourth phase coil of the V phase, W1 is a first phase coil of a W phase, W2 is a second phase coil of the W phase, W3 is a third phase coil of the W phase, and W4 is a fourth phase coil of the W phase, the phase coils are wound around the teeth in an order of U1, V3, W2, U4, V1, W3, U2, V4, W1, U3, V2, W4, and then U1 counterclockwise.

8. The rotating electric machine of claim 6,
wherein, in a case where the number of poles n of the permanent magnets is 10, the number of slots m is 15, the number of phases of the coils is 3, and the number s of the phase coils connected in series is 5, and a case where U1 is a first phase coil of a U phase, U2 is a second phase coil of the U phase, U3 is a third phase coil of the U phase, U4 is a fourth phase coil of the U phase, U5 is a fifth phase coil of the U phase, V1 is a first phase coil of a V phase, V2 is a second phase coil of the V phase, V3 is a third phase coil of the V phase, V4 is a fourth phase coil of the V phase, V5 is a fifth phase coil of the V phase, W1 is a first phase coil of a W phase, W2 is a second phase coil of the W phase, W3 is a third phase coil of the W phase, W4 is a fourth phase coil of the W phase, and W5 is a fifth phase coil of the W phase, the phase coils are wound around the teeth in an order of U1, V4, W2, U5, V3, W1, U4, V2, W5, U3, V1, W4, U2, V5, W3, and then U1 counterclockwise.

9. The rotating electric machine of claim 6,
wherein, in a case where the number of poles n of the permanent magnets is 12, the number of slots m is 18, the number of phases of the coils is 3, and the number s of the phase coils connected in series is 6, and a case where U1 is a first phase coil of a U phase, U2 is a second phase coil of the U phase, U3 is a third phase coil of the U phase, U4 is a fourth phase coil of the U phase, U5 is a fifth phase coil of the U phase, U6 is a sixth phase coil of the U phase, V1 is a first phase coil of a V phase, V2 is a second phase coil of the V phase, V3 is a third phase coil of the V phase, V4 is a fourth phase coil of the V phase, V5 is a fifth phase coil of the V phase, V6 is a sixth phase coil of the V phase, W1 is a first phase coil of a W phase, W2 is a second phase coil of the W phase, W3 is a third phase coil of the W phase, W4 is a fourth phase coil of the W phase, W5 is a fifth phase coil of the W phase, and W6 is a sixth phase coil of the W phase, the phase coils are wound around the teeth in an order of U1, V6, W3, U4, V2, W6, U3, V5, W2, U6, V1, W5, U2, V4, W1, U5, V3, W4, and then U1 counterclockwise.

10. The rotating electric machine of any one of claims 1 to 9,
wherein a distance between each of the teeth and one end of the coil wound around the tooth that is close to an inverter is larger than a distance between the tooth and an other end of the coil wound around the tooth.

FIG. 1

EP 3 820 024 A1

FIG. 2

FIG. 3

EP 3 820 024 A1

EP 3 820 024 A1

FIG. 4

TO INVERTER

41a  2

41b  2

42b

TO NEUTRAL POINT

6

U1

U2

42a

5

3

3

FIG. 5

FIG. 6

EP 3 820 024 A1

FIG. 7

FIG. 8

EP 3 820 024 A1

FIG. 9

EP 3 820 024 A1

FIG. 10

FIG. 11

FIG. 12

# FIG. 13

TO INVERTER

TO NEUTRAL POINT

42a

41a

41b

41c

U1

U2

U3

42b

42c

3

3

3

FIG. 14

FIG. 15

FIG. 16

EP 3 820 024 A1

FIG. 17

EP 3 820 024 A1

FIG. 18

EP 3 820 024 A1

FIG. 19

EP 3 820 024 A1

FIG. 20

FIG. 21

EP 3 820 024 A1

FIG. 22

FIG. 23

EP 3 820 024 A1

FIG. 24

FIG. 25

FIG. 26

FIG. 27

FIG. 28

FIG. 29

FIG. 30

EP 3 820 024 A1

FIG. 31

**INTERNATIONAL SEARCH REPORT**

| International application No. |
| --- |
| PCT/JP2019/024308 |

**A. CLASSIFICATION OF SUBJECT MATTER**
Int.Cl. H02K3/28(2006.01)i, H02K1/14(2006.01)i, H02K3/18(2006.01)i

According to International Patent Classification (IPC) or to both national classification and IPC

**B. FIELDS SEARCHED**

Minimum documentation searched (classification system followed by classification symbols)
Int.Cl. H02K3/28, H02K1/14, H02K3/18

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2002-101686 A (EBARA CORPORATION) 05 April 2002, paragraphs [0026]-[0027], fig. 3-4 (Family: none) | 1-5,10<br>6-9 |
| Y | JP 2016-15854 A (NSK LTD.) 28 January 2016, paragraphs [0055]-[0070], fig. 1, 8 (Family: none) | 1-5,10 |
| Y | JP 2013-165566 A (MITSUBISHI ELECTRIC CORP.) 22 August 2013, paragraphs [0031]-[0039], fig. 7-9 (Family: none) | 1-5,10 |
| Y | JP 2006-60929 A (YASKAWA ELECTRIC CORPORATION) 02 March 2006, paragraph [0007], fig. 1-2 (Family: none) | 2-5,10 |

☐ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 September 2019 (02.09.2019) | 10 September 2019 (10.09.2019) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**EP 3 820 024 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002112488 A

- JP 2011030309 A